# EUROPÄISCHE PATENTSCHRIFT

(11) **EP 2 468 615 B1**
(45) Veröffentlichungstag und Bekanntmachung des Hinweises auf die Patenterteilung: **27.05.2015**
(21) Anmeldenummer: 11010037.7
(22) Anmeldetag: 21.12.2011
(51) Int. Cl.: B62K 25/04, F16F 9/53, B60G 17/08

(54) **Fahrwerksteuerung für ein Fahrrad**
Chassis control for a bicycle
Commande de châssis pour un vélo

(30) Priorität: 23.12.2010 DE 102010055830
(43) Veröffentlichungstag der Anmeldung: 27.06.2012
(73) Patentinhaber: DT Swiss AG, 2500 Biel (CH)
(72) Erfinder: Battlogg, Stefan, 6771 St. Anton i.M. (AT); Pösel, Jürgen, 6700 Bludenz (AT); Elsensohn, Gernot, 6771 St. Anton i.M. (AT); Walthert, Martin, 3270 Aarberg (CH)
(74) Vertreter: BSB Intellectual Property Law

(56) Entgegenhaltungen:
- EP-A1- 1 394 439
- EP-A2- 1 880 936
- WO-A1-02/097282
- WO-A2-2010/007433
- US-A- 6 131 709
- US-A1- 2003 160 369
- US-A1- 2006 064 223
- US-B1- 6 471 018

## Beschreibung

Die vorliegende Erfindung betrifft eine Fahrwerksteuerung für ein wenigstens teilweise muskelbetriebenes Zweirad und insbesondere ein Fahrrad, welches wenigstens eine Dämpfereinrichtung zur Dämpfung von Stößen aufweist.

Es sind im Stand der Technik Fahrraddämpfer bekannt geworden, die zur Dämpfung von Stößen dienen. Mit der US 2009/0192673 A1 ist ein Fahrrad bekannt geworden, welches einen steuerbaren Dämpfer aufweist. Der Dämpfer umfasst ein verstellbares Ventil, wobei die Größe der Öffnung des Ventils durch einen elektrischen Motor gesteuert wird. Ein solches System funktioniert grundsätzlich. Nachteilig an dem bekannten System ist allerdings die Verstellung der Durchlassöffnung des Ventils durch einen elektrischen Motor, da solche motorisch bewegten Teile fehleranfällig sind.

Die WO 02/097282 A1 offenbart eine Fahrwerkssteuerung, auf der der Oberbegriff von Anspruch 1 basiert. Dort ist ein Ventil auf Basis eines magnetorheologischen Fluids (MRF) offenbart, bei dem eine elektrische Spule zur Erzeugung eines magnetischen Feldes in einem Ringspalt eingesetzt wird. Ein Sensor dient zur Erfassung von Schwingungen bei einem Erdbeben oder zur Erfassung von mechanischen Reaktionen bei Fahrzeugdämpfungssystemen.

Die WO 2010/007433 A2 zeigt Dämpfer für Mountainbikes, wobei ein Sensor zur Erfassung einer dynamischen Bewegung vorgesehen ist und wobei die Dämpfung in Abhängigkeit von der dynamischen Bewegung eingestellt wird.

Die EP 1 394 439 A1 betrifft ein Stossdämpfungssystem für Zweiräder, bei dem Sensoren zum Messen von kinetischen und/oder kinetischen Größen oder auch Druckaufnehmer eingesetzt werden.

Mit der US 2006/0064223 A1 ist ein Fahrzeugdämpfungssystem bekannt geworden, bei dem Sensoren Änderungen von Steuerparametern in Bezug zu dem Fahrzeug erfassen. Eine Steuereinrichtung leitet daraus entsprechende Ausgangssignale ab, die verwendet werden, um die Dämpfungseigenschaten einzustellen.

Es ist deshalb die Aufgabe der vorliegenden Erfindung, eine Fahrwerksteuerung für ein wenigstens teilweise muskelbetriebenes Zwei- oder Mehrrad zur Verfügung zu stellen, welche mit erhöhter Wirksamkeit bei der Steuerung der Dämpfungseigenschaft ohne motorisch bewegte Teile auskommt.

Diese Aufgabe wird gelöst durch eine Fahrwerksteuerung mit den Merkmalen des Anspruchs 1. Bevorzugte Ausgestaltungen der Erfindung sind Gegenstand der weiteren Ansprüche. Weitere Vorteile und Merkmale der Erfindung ergeben sich aus dem Ausführungsbeispiel.

Eine erfindungsgemäße Fahrwerksteuerung ist für den Einsatz an wenigstens teilweise muskelbetriebenen Zwei- oder Mehrrädern vorgesehen und umfasst wenigstens eine Dämpfereinrichtung mit einer ersten Dämpferkammer und wenigstens einer zweiten Dämpferkammer. Dabei sind die erste Dämpferkammer und die zweite Dämpferkammer über wenigstens ein steuerbares Dämpfungsventil miteinander gekoppelt. Wenigstens ein Sensor ist vorgesehen, der Daten über wenigstens einen aktuellen Zustand erfasst. Weiterhin sind eine elektrische Steuereinrichtung und eine Speichereinrichtung zur Steuerung der Dämpfereinrichtung vorgesehen, derart, dass wenigstens eine Dämpfungseigenschaft der Dämpfereinrichtung durch ein Signal der Steuereinrichtung beeinflussbar ist. Vorteilhafterweise ist dem Dämpfungsventil eine Felderzeugungseinrichtung zugeordnet, welche zur Erzeugung und Steuerung einer Feldstärke in dem wenigstens einen Dämpfungskanal des Dämpfungsventils dient. Der Dämpfungskanal ist durch wenigstens eine Zwischenwand in wenigstens zwei Teilkanäle unterteilt. Die Teilkanäle erstrecken sich quer zu den Magnetfeldlinien. In dem Dämpfungskanal ist wenigstens ein feldempfindliches rheologisches Medium vorgesehen, um die Dämpfungseigenschaft der Dämpfereinrichtung in Abhängigkeit von den Daten des Sensors zu steuern.

Die erfindungsgemäße Fahrwerksteuerung hat viele Vorteile. Ein erheblicher Vorteil der erfindungsgemäßen Fahrwerksteuerung liegt darin, dass ein steuerbares Dämpfungsventil in der Dämpfereinrichtung eingesetzt wird, und dass das Dämpfungsventil ohne motorisch bewegte Teile auskommt. Insgesamt werden zur gezielten oder gesteuerten Beeinflussung des Durchflusses durch das Dämpferventil keinerlei bewegte Teile benötigt. Die Veränderung oder Einstellung kann berührungslos mittels der Felderzeugungseinrichtung erfolgen.

Zur Variation der Dämpfungseigenschaften der Dämpfereinrichtung wird mit der Felderzeugungseinrichtung eine definierte Feldstärke in wenigstens einem Dämpfungskanal des Dämpfungsventils erzeugt, in dem sich ein rheologisches Medium befindet, welches empfindlich auf das angelegte Feld reagiert. Durch ein angelegtes Feld ändern sich die rheologischen Eigenschaften des Mediums und insbesondere ändert sich die Viskosität des feldempfindlichen rheologischen Mediums. Über ein solches Feld kann auf einfache Art und Weise ohne den Einsatz motorisch bewegter Teile die Durchlässigkeit des Dämpfungskanals in einem erheblichen Umfang variiert werden, sodass eine flexible und je nach Bedarf einstellbare Dämpfereinrichtung zur Verfügung gestellt werden kann.

Eine solche Fahrwerksteuerung erlaubt es, in der Speichereinrichtung Kennlinien für die Dämpfereinrichtung abzulegen, die mit der Steuereinrichtung wieder abrufbar sind. Dadurch können über einfache Mittel unterschiedlichste Dämpfungseigenschaften bei der gleichen Dämpfereinrichtung eingestellt werden.

Durch den Einsatz einer Felderzeugungseinrichtung, die ein Feld in dem Dämpfungskanal bei Bedarf erzeugt, wird eine betriebssichere Fahrwerksteuerung ermöglicht, die haltbarer und weniger fehleranfällig ist. Ein weiterer Vorteil liegt in der erheblichen Reaktionsgeschwindigkeit, da mit der Felderzeugungseinrichtung praktisch sofort die angestrebte Intensität des Feldes anliegt. Dadurch wird eine sehr schnelle Steuerung des Dämpfungsventils ermöglicht, welches in Echtzeit veränderbare Eigenschaften aufweist.

Insbesondere wird es auch ermöglicht, die Eigenschaften des Dämpfungsventils in Abhängigkeit von dem aktuellen Signal des Sensors zu steuern. Die Aktivierung eines Motors, der durch seine Bewegung die Größe der Öffnung eines Ventils verändert, um die Dämpfungseigenschaften zu beeinflussen, ist bei der vorliegenden Erfindung nicht erforderlich. Die Felderzeugungseinrichtung muss dabei nicht einmal direkt neben dem Dämpfungskanal vorgesehen sein, sondern kann auch entfernt davon angeordnet sein, wenn entsprechende feldleitende Materialien vorgesehen sind, um die vorgesehene Feldstärke in dem Dämpfungskanal zu gewährleisten.

Die Eigenschaften des Dämpfungsventils können gesteuert oder auch geregelt werden. Die Eigenschaften des Dämpfungsventils können aktiv oder passiv in Abhängigkeit von dem aktuellen Signal wenigstens eines Sensors gesteuert oder geregelt werden. Unter dem Begriff Steuerung wird im Sinne der vorliegenden Erfindung in bevorzugten Weiterbildungen auch eine Regelung verstanden. Eine solche Regelung kann aktiv oder passiv sein.

Besonders bevorzugt wird als rheologisches Medium ein magnetorheologisches Medium und insbesondere ein magnetorheologisches Fluid eingesetzt. Beispielsweise kann ein Öl oder dergleichen eingesetzt werden, in dem magnetorheologische Partikel enthalten sind. Solche magnetorheologische Partikel verketten sich praktisch entlang der Feldlinien eines angelegten Magnetfeldes, sodass quer zu den Feldlinien eines angelegten Magnetfeldes eine erheblich höhere Viskosität vorliegt, als wenn kein Magnetfeld angelegt wird. Über die Intensität und Stärke des Magnetfeldes wird die resultierende Viskosität entsprechend beeinflusst. Die Reaktionsgeschwindigkeit ist sehr hoch. Beispielsweise reagiert ein magnetorheologisches Fluid innerhalb von etwa 1 oder 2 ms und ändert die Viskosität in Abhängigkeit von dem angelegten Feld.

Durch die Erfindung wird es ermöglicht, unterschiedlichste Parameter der Dämpfereinrichtung an die aktuellen Bedingungen und die aktuellen Wünsche des Benutzers anzupassen.

Insbesondere ist es auch möglich und bevorzugt, die Dämpfungseigenschaften werkseitig voreinzustellen oder vorzuprogrammieren. Auch eine Kalibrierung und Rekalibrierung ist möglich.

Die Fahrwerksteuerung kann an einem Fahrrad eingesetzt werden, kann aber auch an anderen muskelbetriebenen Ein- oder Mehrrädern, auch mit einem Hilfsantrieb, wie beispielsweise einer Elektrounterstützung, eingesetzt werden.

Die Erfindung kann eine Dämpfereinrichtung als Vorderraddämpfer oder aber auch eine Dämpfereinrichtung als Hinterraddämpfer umfassen. Möglich und bevorzugt ist es auch, ein Fahrrad mit einem Vorderraddämpfer und einem Hinterraddämpfer auszurüsten und mit der erfindungsgemäßen Fahrwerksteuerung beide Dämpfer gemeinsam zu steuern oder zu regeln. Dadurch wird eine besonders gut aufeinander abgestimmte Betriebsart ermöglicht, die sich besonders stark nach den Wünschen des Benutzers richtet. Zusätzlich kann auch noch ein weiterer Dämpfer vorgesehen sein, beispielsweise an der Sattelstütze.

Beispielsweise kann eine Einstellung bzw. ein Schalter vorgesehen sein, der die Fahrwerksteuerung von einer sportlichen Dämpfungsstellung in eine bequeme Dämpfungsstellung überführt. Möglich ist es auch, die Dämpfereinrichtung praktisch auszuschalten, um auf glatten Straßen oder dergleichen die Wirkung der Dämpfereinrichtung möglichst stark zu reduzieren oder ganz zu eliminieren.

Es ist möglich, dass an dem Dämpfungsventil unterschiedliche Kanäle bzw. Dämpfungskanäle für die Druckstufe und die Zugstufe vorgesehen sind, die dann jeweils separat angesteuert werden können. Möglich ist es aber auch, dass das Dämpfungsventil einen Kanal oder mehrere immer gemeinsam von der Felderzeugungseinrichtung beaufschlagbare Kanäle umfasst, wobei der Durchfluss durch das Dämpfungsventil bei der Druckstufe und auch der Zugstufe in Echtzeit gesteuert wird, sodass zu jedem Zeitpunkt die gewünschten Durchflussbedingungen vorherrschen.

Vorzugsweise umfasst die Felderzeugungseinrichtung wenigstens eine elektrische Spule zur Erzeugung eines Magnetfeldes. Möglich und bevorzugt ist es auch, dass wenigsten eine Felderzeugungseinrichtung als Dauermagnet ausgebildet ist. Es ist möglich, dass das Magnetfeld der Spule dynamisch dem Magnetfeld des Dauermagneten überlagert wird, um beliebige Feldstärken einzustellen.

Besonders bevorzugt ist die Feldstärke des Dauermagneten zu beliebigen Zeitpunkten beliebig häufig so veränderbar, dass die eingestellte Feldstärke dauerhaft eingestellt bleibt. Die Einstellung der Feldstärke des Dauermagneten kann insbesondere durch wenigstens einen magnetischen Impuls auf einen beliebigen Wert zwischen Null und der Remanenz einstellbar sein. Vorzugsweise ist der magnetische Impuls durch die elektrische Spule erzeugbar.

Eine solche Ausgestaltung ist besonders vorteilhaft, da ein Dauermagnet als Felderzeugungseinrichtung dauerhaft seine Feldstärke beibehält, ohne dabei ständig Strom zu benötigen. Ein einmal mit einer bestimmten Feldstärke magnetisierter Dauermagnet erzeugt für lange Zeiträume von Minuten, Stunden oder Tagen und somit praktisch für immer ein konstantes Magnetfeld, sodass auch ohne weitere Energiezufuhr die Dämpfungseigenschaften des Dämpfungsventils konstant bleiben. Wird ein solcher Dauermagnet durch geeignete magnetische Impulse einer elektrischen Spule ummagnetisiert, so weist der Dauermagnet eine insbesondere beliebig einstellbare Feldstärke auf, die definiert zwischen Null und der durch die Remanenz vorgegebenen maximalen Feldstärke liegt.

Wird beispielsweise bei der Fahrt über Kopfsteinpflaster oder dergleichen eine bestimmte Dämpfungseigenschaft über einen längeren Zeitraum benötigt, so kann über einen magnetischen Impuls der elektrischen Spule der Dauermagnet auf die gewünschte Feldstärke eingestellt werden, woraufhin der Dauermagnet seine neu eingestellte Feldstärke dauerhaft bis zur nächsten Änderung behält und somit dauerhaft ohne weitere Energiezufuhr die Dämpfereinrichtung der Fahrwerksteuerung ihre nun eingestellten Bedingungen beibehält. Eine Ummagnetisierung auf ein höheres oder tieferes Feldstärkenniveau ist durch kurze magnetische Impulse der elektrischen Spule jederzeit möglich, sodass eine beliebige Steuerung der Dämpfungseigenschaften der Dämpfereinrichtung möglich ist. Eine solche Ausgestaltung bietet eine hohe Funktionalität, während der Energiebedarf gering ist.

Durch eine geeignete Folge eines sich abschwächenden magnetischen Wechselfeldes kann die Feldstärke des Dauermagneten gezielt geschwächt oder auf Null gebracht werden. Auch die Polarität der Magnetisierung ist veränderbar.

Es ist auch möglich, dass mit dem Dauermagnet ein statisches Magnetfeld erzeugt wird, welches von einem dynamischen Magnetfeld der Spule überlagerbar ist, ohne das statische Magnetfeld dadurch dauerhaft zu beeinflussen. Durch eine solche dynamische Beeinflussung des statischen Magnetfeldes des Dauermagneten kann eine beliebige Feldstärke erzeugt werden.

Vorzugsweise besteht der Dauermagnet wenigstens teilweise aus einem hartmagnetischen Werkstoff. Der Dauermagnet ist insbesondere wenigstens aus einem solchen Material gefertigt und derart strukturiert, dass in dem Dämpfungskanal eine magnetische Flussdichte von wenigstens 0,3 Tesla und insbesondere von wenigstens 0,5 Tesla erzeugbar ist.

Der Dauermagnet besteht wenigstens teilweise aus einem Material, welches eine Koerzitivfeldstärke größer als 1 kA/m und insbesondere größer als 5 kA/m und vorzugsweise größer 10 kA/m aufweist. Vorzugsweise besteht der Dauermagnet aus einem Material, welches eine Koerzitivfeldstärke kleiner als 1000 kA/m und vorzugsweise kleiner 500 kA/m und besonders bevorzugt kleiner 200 kA/m aufweist.

Vorzugsweise ist wenigstens eine Energiespeichereinrichtung vorgesehen. Eine solche Energiespeichereinrichtung kann als Kondensatoreinrichtung ausgeführt sein, kann aber auch ein konventioneller Akku sein, der beispielsweise bei einem E-Bike sowieso vorhanden ist.

Grundsätzlich wird bei Dämpfereinrichtungen für Fahrräder ein gutes und ergonomisches Ansprechverhalten angestrebt. Ein Aspekt dabei ist ein Nulldurchgang des Kraft- und Geschwindigkeitsverlaufs. Das bedeutet, dass sich ein ruhender Kolben schon bei kleinen oder kleinsten Kräften zu bewegen beginnt. Ein Nulldurchgang der Kennlinie des Dämpfers ist für einen homogenen Übergang von der Druck- zur Zugstufe sehr vorteilhaft.

Die DE 698 21 799 T2 zeigt ein regelbares Ventil und einen Schwingungsdämpfer für ein Fahrrad, wobei ein solcher homogenen Übergang von der Druck- zur Zugstufe nicht erzielt wird. Bei der DE 698 21 799 T2 wird ein Permanentmagnet zur Erzeugung des magnetischen Feldes eingesetzt. Mechanische Einstellmittel dienen zum Einstellen der Stärke des magnetischen Feldes, welches auf den mit einem magnetorheologischen Fluid gefüllten Durchgangskanal einwirkt. Dabei wird zur Einstellung der Stärke des Magnetfeldes der Abstand des Magneten zum Durchgangskanal variiert. Mit zunehmendem Abstand reduziert sich die Feldstärke im Durchgangskanal. Über diese Maßnahme wird die Stärke des Magnetfeldes in dem Durchgangskanal eingestellt und somit direkt die Stärke der Verkettung der einzelnen Partikel in dem magnetorheologischen Fluid beeinflusst.

Nachteilig an dem System gemäß der DE 698 21 799 T2 ist aber, dass im Betrieb erst eine bestimmte Losbrechkraft überwunden werden muss, bis das magnetorheologische Fluid durch den Dämpfungskanal fließt, da das durch den Permanentmagneten erzeugte Magnetfeld eine bestimmte Verkettung der magnetorheologischen Partikel in dem Durchgangskanal bewirkt. Das bedeutet, dass bei kleineren Stößen keine Dämpfung auftritt. Eine Dämpfung erfolgt erst bei Stößen, deren Größe oberhalb der Losbrechkraft liegt. Das Ansprechverhalten der Dämpfung ist somit schlecht, denn nur starke Stöße werden gedämpft. Die Größe der Losbrechkraft kann zwar über die Stärke des Magnetfeldes eingestellt werden, indem der Permanentmagnet weiter von dem Spalt entfernt wird, um das wirkende Feld zu verringern, oder indem der Permanentmagnet weiter an den Spalt heran gebracht wird, um das wirkende Feld zu verstärken. Nachteilig daran ist aber, dass für jede gewünschte Stärke eines Stoßes, ab der der Dämpfer arbeiten soll, der Permanentmagnet in seiner Position verändert werden muss. Stöße mit geringeren Losbrechmomenten werden nicht gedämpft. Bei Stößen mit größeren Losbrechmomenten öffnet der Durchgangskanal und der Stoß wird entsprechend der Feldstärke gedämpft.

Um ein besonders ergonomisches Ansprechverhalten zu erzielen, kann der Dämpfungskanal und/oder die Felderzeugungseinrichtung wenigstens einer Dämpfereinrichtung derart strukturiert sein, dass der Dämpfungskanal über seinem Querschnitt einem insbesondere gezielt inhomogenen Feld aussetzbar ist.

Vorzugsweise ist an der Dämpfereinrichtung wenigstens eine Einstelleinrichtung vorgesehen, mit welcher das in dem oder in wenigstens einem Dämpfungskanal wirkende Feld einstellbar ist.

Besonders bevorzugt ist mit der Einstelleinrichtung wenigstens ein Anteil des Querschnittes des Dämpfungskanals einstellbar, der einem Feld bestimmter Stärke ausgesetzt ist, sodass der Querschnitt des Dämpfungskanals auch nur teilweise einem Feld bestimmter Stärke aussetzbar ist.

Dabei ist mit der Einstelleinrichtung insbesondere wenigstens ein Anteil der Querschnittsfläche des Dämpfungskanals einstellbar, der einem Feld bestimmter und insbesondere vorbestimmter Stärke ausgesetzt ist, sodass die Querschnittsfläche des Dämpfungskanals auch nur teilweise einem Feld bestimmter Stärke aussetzbar ist.

Dadurch wird ein Nulldurchgang des Kraft - Geschwindigkeitsverlaufs erzielt. Der Dämpfungskanal wird praktisch in einen Übergangsabschnitt und gegebenenfalls einen Bypassabschnitt aufgeteilt.

Insbesondere ist mit der Einstelleinrichtung wenigstens ein Anteil der Querschnittsfläche des Dämpfungskanals einstellbar, der einem Feld bestimmter und insbesondere vorbestimmter Stärke ausgesetzt ist. Dadurch kann die Querschnittsfläche des Dämpfungskanals wahlweise auch nur teilweise einem Feld bestimmter Stärke aussetzbar sein.

Es ist auch möglich, dass mit der Einstelleinrichtung der Volumenanteil des Dämpfungskanals einstellbar ist, auf welchen ein Feld bestimmter Stärke einwirkt.

Insbesondere weist der Dämpfungskanal wenigstens einen dem Feld ausgesetzten Wirkabschnitt und/oder einen dem Feld gar nicht oder nur sehr gering ausgesetzten Bypass-Abschnitt auf, wobei wenigstens ein Übergangsbereich an den Wirkabschnitt und/oder Bypass-Abschnitt angrenzt, wobei wenigstens der Übergangsbereich vorzugsweise einstellbar ist.

Ein erheblicher Vorteil einer Fahrwerksteuerung mit einer solchen Dämpfereinrichtung ist, dass der Querschnitt des Dämpfungskanals nicht insgesamt und vollständig einem bestimmten magnetischen und/oder auch elektrischen Feld ausgesetzt werden muss, sondern es ist möglich, nur einen festen oder variablen Anteil des Querschnittes des Dämpfungskanals dem Feld auszusetzen. Das kann beispielsweise darüber erfolgen, dass die dem Feld ausgesetzte Spaltgröße über die Einstelleinrichtung eingestellt oder auch fest vorgegeben wird. Die Felderzeugungseinrichtung und/oder der Dämpfungskanal können gegeneinander verstellbar ausgeführt sein. Es wird die Inhomogenität des Feldes ausgenützt.

Das führt praktisch zu einer quasi Mehrteilung des Dämpfungskanals und in einem einfachen Fall zu einer Dreiteilung des Spaltes des Dämpfungskanals in drei verschiedene Wirkbereiche:
Ein Wirkabschnitt oder Wirkbereich des Querschnittes ist dem vollen Feld ausgesetzt, ein Übergangsabschnitt des Querschnittes ist nur einem Teilfeld ausgesetzt und ein Teil des Querschnittes, nämlich der Bypass-Abschnitt, ist dem Feld gar nicht oder fast gar nicht ausgesetzt.

Die Mehrteilung erfolgt insbesondere ohne separate Kanäle oder Trennwände in Abschnitte oder Bereiche nicht mechanisch, sondern vorzugsweise nur durch das Magnetfeld. Das gilt auch für den Bypass-Abschnitt, welcher durch einen Teil des Querschnittes des Dämpfungskanals gebildet wird.

Die Aufteilung des Querschnittes des Dämpfungskanals erfolgt durch ein örtlich inhomogenes Feld, welches in dem Bypass-Abschnitt eine geringe oder sehr geringe Stärke und in dem Wirkabschnitt eine hohe oder höhere Stärke aufweist. Zwischen dem Bypass-Abschnitt und dem Wirkabschnitt ist insbesondere der Übergangsabschnitt vorgesehen, der über seinem Querschnittsanteil stark inhomogen ausgebildet ist und über den die Feldstärke von dem geringeren Wert des Bypass-Abschnitts auf den höheren Wert des Wirkabschnitts ansteigt.

Vorzugsweise ist die Feldstärke über den Querschnittsanteil des Wirkabschnitts eher konstant. Vorzugsweise ist die Feldstärke über den Querschnittsanteil des Bypass-Abschnitts ebenfalls eher konstant. In dem Übergangsabschnitt ist die Feldstärke stark inhomogen und steigt von dem geringen Wert in dem Bypass-Abschnitt auf den hohen Wert in dem Wirkabschnitt an.

Der wenigstens eine Bypass-Abschnitt wirkt als Bypass-Kanal, und führt zu einem Nulldurchgang der Kennlinie der Dämpfereinrichtung. Aufgrund der veränderlichen Querschnittsgröße des Bypass-Kanals kann die Steigung der Dämpferkennlinie wunschgemäß eingestellt werden.

Der Übergangsabschnitt ist nur einem insbesondere inhomogenen Teilfeld - dem schwächer werdenden Randfeld (Streufeld) - ausgesetzt, in welchem die Verkettung der Partikel schwach ist und zum Rand hin stetig schwächer wird. Der Übergangsabschnitt bleibt bei geringer Belastung geschlossen. Das Teilfeld bewirkt bei geringer Belastung praktisch einen Verschluss des Übergangsabschnittes. Bei geringer Belastung bzw. geringen Stößen bestimmt nur der eingestellte Bypass-Abschnitt den jeweiligen Arbeitspunkt auf der Dämpferkennlinie. Der eingestellte Bypass-Abschnitt definiert die Kennlinie des Dämpfers bei geringer Belastung.

Bei zunehmender Belastung durch eine höhere Kolbenkraft bzw. Kolbengeschwindigkeit reißt die durch den Bypass-Abschnitt fließende Strömung des Dämpfungsfluids die teilweise bzw. schwach miteinander verketteten Partikel zunächst über einen Teil in dem benachbarten Übergangsabschnitt mit.

Außerdem übersteigt mit steigender Belastung die Scherkraft die Bindungskraft der verketteten Partikel. Der Strömungsquerschnitt des Bypass-Abschnitts wird mit zunehmender Belastung folglich größer und die Querschnittsfläche des geschlossenen Übergangsabschnitts entsprechend kleiner. Damit wird ein nicht-lineares Dämpferverhalten realisiert. Der Übergangsabschnitt der Dämpferkennlinie von dem Low-Speed-Bereich zu dem High-Speed-Bereich wird gekrümmt und ein ergonomisch ungünstiger Knickpunkt wird zuverlässig vermieden. Es kann eine stetige und zu beiden Enden hin asymptotische Dämpferkennlinie erzeugt werden.

Dadurch ergeben sich vielfältige Möglichkeiten, da beispielsweise eine praktisch unbeeinflusste Spaltgröße in dem Dämpfungskanal kontinuierlich, quasi-kontinuierlich oder in bestimmten Schritten veränderbar ist. Beispielsweise kann die von einem Feld im Wesentlichen unbeeinflusste Querschnittsfläche des Dämpfungskanals in 5 %-, 10 %-, 20 %-, 25 %- oder in 33 %-Schritten einstellbar sein, um in zwei, drei oder mehr Schritten einen entsprechenden Anteil der Querschnittsfläche des Dämpfungskanals dem Magnetfeld auszusetzen.

Vorzugsweise ist mit einer Einstelleinrichtung der Flächenanteil des Querschnittes des Dämpfungskanals einstellbar, auf welchen ein Feld bestimmter Stärke einwirkt. Dabei wirkt der Flächenanteil des Dämpfungskanals, der nicht von dem Feld beeinflusst wird, praktisch als Bypass, sodass durch das Feld die bei kleineren Stößen wirksame Querschnittsfläche entsprechend verkleinert wird, während bei Stößen, die die Losbrechkraft des dem Feld ausgesetzten und durch ein Feld beeinflussbaren Fluids übersteigt, die vollständige Querschnittsfläche des Dämpfungskanals zur Dämpfung eingesetzt wird.

Es ist auch möglich, das zusätzlich oder auch anstelle von dem Flächenanteil der Volumenanteil des Dämpfungskanals einstellbar ist, auf welchen das Feld bestimmter Stärke einwirkt.

Vorzugsweise ist die Einstelleinrichtung von der Steuereinrichtung automatisch steuerbar.

Über den gesamten Querschnitt des Dämpfungskanals kann ein Mittelwert einer Feldstärke bzw. ein gesamter Durchschnittswert bestimmt werden. Das Feld ist über den Querschnitt des Dämpfungskanals inhomogen. Durch eine Einstelleinrichtung kann der Querschnittsanteil eingestellt werden, in dem das Feld schwächer oder stärker ist als der gesamte Durchschnittswert der Feldstärke.

Insbesondere kann das Verhältnis von gleichzeitig auf den Dämpfungskanal einwirkender maximaler Feldstärke und minimaler Feldstärke eingestellt werden, während auch der Flächenanteil einstellbar ist, in dem ein Magnetfeld mit überdurchschnittlicher Stärke wirkt. Vorzugsweise ist der Flächenanteil einstellbar, über den das Magnetfeld inhomogen ist und sich von der maximalen Feldstärke auf die minimale Feldstärke reduziert.

Die Einstelleinrichtung kann wenigstens ein längsverschiebliches Einstellelement und/oder wenigstens eine Dreheinrichtung umfassen. Die Dreheinrichtung umfasst insbesondere wenigstens eine Dreheinheit zur Einstellung wenigstens eines Dämpfungskanals für die Zugstufe und/oder eine Dreheinheit zur Einstellung wenigstens eines Dämpfungskanals für die Druckstufe. Die Dreheinheiten können koaxial ausgebildet sein.

Die Steuereinrichtung kann beispielsweise über die Erzeugung eines elektrischen oder bestimmten magnetischen Feldes zu einer Drehung einer Dreheinheit führen, wodurch der Anteil des Bypass-Abschnitts oder des übergangsabschnitts einstellbar ist.

Zur Bewegung der Dreheinheit oder der Dreheinheiten kann auch ein Motor vorgesehen sein, der z. B. als Servomotor ausgebildet ist. Dadurch, dass eine solche motorische Komponente nur indirekt auf den Dämpfungskanal einwirkt, wird die motorische Komponente nur geringen Belastungen ausgesetzt, die eine dauerhafte störungsfreie Funktion ermöglichen. Es wird ja nicht die Größe des Dämpfungskanals beeinflusst, sondern es wird beispielsweise über eine Verdrehung der Felderzeugungseinrichtung das auf den Dämpfungskanal wirkende Feld verändert.

Die Einstelleinrichtung wirkt insbesondere über eine mechanische Verstellung oder Bewegung auf das Feld in dem Dämpfungskanal ein.

Möglich und bevorzugt ist es auch, die Einstelleinrichtung ohne bewegte Teile zu realisieren. Beispielsweise kann das Dämpfungsventil einer Dämpfereinrichtung zwei oder auch mehr Felderzeugungseinrichtungen aufweisen, die getrennt ansteuerbar sind. Wirkt eine erste Felderzeugungseinrichtung auf einer Seite des Dämpfungskanals und eine zweite Felderzeugungseinrichtung auf einer zweiten und insbesondere gegenüberliegen Seite des Dämpfungskanals. Dann kann auf einer ersten Seite ein starkes Feld wirken, während auf der zweiten Seite das Feld der zweiten Felderzeugungseinrichtung das Feld der ersten Felderzeugungseinrichtung überlagert und aufhebt. Dadurch wird ein stark inhomogenes Feld über den Dämpfungskanal erzeugt, wobei die Stärke des Feldes und die Stärke der Inhomogenität einstellbar sind. Möglich sind auch mehr als zwei Felderzeugungseinrichtungen, die eine noch bessere Feinjustage der Feldintensität über dem Querschnitt des Dämpfungskanals ermöglichen. Einzelne Felderzeugungseinrichtungen können als einstellbarer Dauermagnet oder als elektrische Spule realisiert werden.

Es ist möglich, dass die Felderzeugungseinrichtung mehrere Polpaare zur Erzeugung eines Magnetfeldes umfasst, sodass mehrere Übergangsbereiche in dem Dämpfungskanal erzeugt werden können.

In allen Ausgestaltungen kann eine Abdichtung des Dämpferkolbens zur Gehäusewand mittels eines Dauermagneten erfolgen, wobei das Feld des Dauermagneten zu einer örtlichen Verkettung des magnetorheologischen Fluids führt und damit eine zuverlässige Abdichtung zwischen der Außenseite des Kolbens und der Lauffläche des Kolbens an der Gehäusewand bewirkt. Vorzugsweise hält die Energiespeichereinrichtung wenigstens die elektrische Energie zum Betrieb während einer kurzen Fahrt bereit. Die Energiespeichereinrichtung ist vorteilhafterweise so dimensioniert, dass das Gewicht und/oder die Abmessungen im vorgesehenen Betrieb nicht wesentlich stören. Bei Fahrrädern mit einem Dynamo und insbesondere Nabendynamo oder dergleichen kann die benötigte Leistung aus dem Dynamo abgegriffen und gegebenenfalls auf den Einsatz eines größeren Energiespeichers verzichtet werden.

In bevorzugten Ausführungsformen ist wenigstens ein GPS-Sensor vorgesehen. Möglich ist es beispielsweise, dass Kartenmaterial in der Speichereinrichtung abgelegt ist, welches neben zweidimensionalen Daten auch Höhenangaben enthält. Wird mittels eines GPS-Sensors der Ort ermittelt, steht damit auch die geografische Höhenlage fest. Möglich ist es aber auch, dass das GPS-Signal nicht nur bezüglich der örtlichen Auflösung auf der Erdoberfläche, sondern auch in Höhenrichtung ausgewertet wird. Die Auswertung eines GPS-Signals bietet viele Vorteile, da beispielsweise bei Rundenfahrten oder bei Fahrten, die eine bestimmte Strecke wiederholen, über das GPS-Signal der jeweils aktuelle lokale Ort zur Verfügung steht und somit auf zuvor abgelegte Daten zu der Streckenbeschaffenheit zurückgegriffen werden kann.

Möglich ist es beispielsweise auch, dass anhand der Ortsdaten eines GPS-Sensors auf vorherige abgespeicherte Einstellungen der Dämpfereinrichtung zurückgegriffen wird und somit die Dämpfereigenschaften der Dämpfereinrichtung genauso gesteuert werden, wie es bei einem vorhergehenden Durchgang der Fall war. Vorzugsweise kann über direkt eingespielte Daten oder über eine Netzwerkverbindung über das Internet oder eine Funkverbindung auf zuvor abgespeicherte Einstellungen anderer Benutzer zurückgegriffen werden.

Möglich ist es aber auch, das anhand der GPS-Daten und anhand von Kartenmaterial auf den weiteren Streckenverlauf geschlossen wird und die Dämpfereinrichtung zeitnah dementsprechend eingestellt wird. Möglich ist beispielsweise auch die Auswertung der Höhendaten des GPS-Sensors oder der im Speicher abgelegten Karten, sodass bei erkannten Bergauffahrten die Dämpfereinrichtung entsprechend eingestellt wird. Beispielsweise kann eine Federgabel bei bestimmten Steigungen automatisch abgesenkt werden und somit das Bergauffahren erleichtern. Bei Bergabfahrten können wiederum geeignete Dämpfungseigenschaften automatisch aktiviert werden, wie beispielsweise ein Ausfahren des Dämpfers, wenn der Dämpfer zuvor beispielsweise für eine Bergauffahrt eingefahren war.

Möglich und bevorzugt ist es auch, dass anhand zuvor gespeicherter Touren auf Beschaffenheitsdaten der gerade befahrenen Strecke zurückgegriffen wird und die Dämpfereinrichtung anhand der in der Speichereinrichtung abgelegten Daten automatisch gesteuert betrieben wird. Eine solche Betriebsart erlaubt eine sehr vorausschauende Fahrweise, bei die Dämpfereinrichtung immer an die gerade vorherrschenden Bedingungen angepasst ist.

Neben dem Einsatz von GPS-Sensoren oder dergleichen kann auch auf einen Entfernungsmesser oder einen Kilometerzähler oder dergleichen zurückgegriffen werden, um die lokale Position zu bestimmen. Ein Messgerät für die zurückgelegte Distanz erlaubt bei einer vorgespeicherten Route eine sehr exakte Positionsbestimmung. Möglich ist auch der Rückgriff auf die Zelldaten von z. B. Mobilfunk- oder Datenübertragungsnetzen, um Informationen über den aktuellen Standort zu erhalten.

Möglich und bevorzugt ist es auch, dass wenigstens eine Kamera oder Stereokamera eingesetzt wird, die beispielsweise die gerade den vor dem Zweirad sich befindenden Boden erfasst und über eine Bildauswertung direkt die Bodeneigenschaften ermittelt und den Dämpfer entsprechend einstellt.

Die Steuereinrichtung kann an oder auch in der Dämpfereinrichtung vorgesehen sein. Möglich ist es auch, dass die Steuereinrichtung separat angeordnet ist.

Möglich und bevorzugt ist es auch, eine Steuereinheit in der Dämpfereinrichtung vorzusehen, die mit einer separat angeordneten Steuereinrichtung wenigstens zeitweise in Datenverbindung steht. Die einzelnen Komponenten wie Federgabel, Hinterraddämpfer und gegebenenfalls Sattelstütze können jeweils eine eigene Steuereinheit aufweisen und sind dann wenigstens zeitweise miteinander und/oder mit der Steuereinrichtung vernetzt.

Eine solche Ausgestaltung ermöglicht es, dass ein zentraler (Fahrrad-)Computer die Gesamtsteuerung übernimmt, während die in der Dämpfereinrichtung vorgesehene Steuereinheit die lokale Steuerung und Regelung vornimmt. Sind beispielsweise ein Hinterraddämpfer und eine Federgabel vorgesehen, können beide Komponenten jeweils eine lokale Steuereinheit aufweisen, mit denen lokal eine Steuerung erfolgt. Die Gesamtsteuerung kann durch die separate Steuereinrichtung erfolgen, die beispielsweise im Steuercomputer, Fahrradcomputer oder in einem Smartphone oder dergleichen untergebracht ist. Der Datenaustausch zwischen den einzelnen Komponenten kann drahtgebunden oder auch drahtlos erfolgen.

Ein erheblicher Vorteil eines magnetorheologischen Mediums ist, dass magnetorheologische Partikel sehr schnell und im Bereich von einer Millisekunde auf ein angelegtes Feld reagieren, sodass praktisch ohne nennenswerte Zeitverzögerung der Dämpfer auf die gewünschte Eigenschaft eingestellt werden kann.

Vorzugsweise ist wenigstens ein Teil des Dauermagneten benachbart zu der Spule angeordnet und/oder von der Spule umgeben, um eine maximale Wirkung der Feldstärke der Spule zu gewährleisten.

Erfindungsgemäß ist wenigstens ein Dämpfungskanal durch wenigstens eine Zwischenwand in wenigstens zwei Teilkanäle unterteilt ist. Dabei erstrecken sich die Teilkanäle wenigstens teilweise insbesondere quer zu den Magnetfeldlinien, um die Wirkung noch einmal zu verstärken.

Es ist bevorzugt, wenn die erste Dämpferkammer und die zweite Dämpferkammer wenigstens teilweise in einem gemeinsamen Dämpfergehäuse angeordnet sind. Auch getrennte Gehäuse sind möglich. Dann werden sie vorzugsweise durch wenigstens einen Dämpferkolben voneinander getrennt, wobei der Dämpferkolben wenigstens einen Dämpfungskanal auf seiner Außenseite aufweisen kann. Möglich ist es auch, dass durch den Dämpferkolben wenigstens ein Dämpfungskanal durchführt.

In bevorzugten Ausgestaltungen ist es möglich, die Federhärte durch z. B. zuschaltbare Federkammern einzustellen und eine Federwegsverstellung vorzunehmen. Eine zuschaltbare Federkammer kann außerhalb des Dämpfergehäuses oder darin vorgesehen sein.

Neben dem Einsatz von GPS-Sensoren sind auch sonstige Sensoren möglich, die beispielsweise die Geschwindigkeit des Fahrrads messen und auswerten und/oder die die Geschwindigkeit oder die Kraft auf den Dämpfer erfassen. Beispielsweise können Lagesensoren, Neigungssensoren, Positionssensoren für den Dämpferkolben oder Zustandssensoren zur Bestimmung des Hubs der Dämpfereinrichtung vorgesehen sein und deren Sensordaten erfasst und ausgewertet werden.

Es ist möglich und bevorzugt, verschiedene Modi der Fahrwerksteuerung einzustellen wie beispielsweise den Modus "Bergauf" oder die Modi "Bergab", "Gelände", "Straße" oder "Rundenfahren". Möglich sind auch die Modi "Lernmodus" und "Wiederholm-Modus". Im Lernmodus werden alle Daten wie Messdaten und Bedieneingaben gespeichert. Im Wiederholmodus werden die Daten und zugehörigen Signale in Abhängigkeit von der jeweiligen Position abgerufen und die Signale werden ohne erneute Eingaben des Benutzers zur Steuerung der Steuerungseinrichtung verwendet. Eine "Override"-Funktion kann vorgesehen sein, die auch im Wiederholmodus alle Bedieneingaben zulässt und vorrangig berücksichtigt und für die nächste Runde speichert.

An der Dämpfereinrichtung können Sensoren vorgesehen sein, die einen Durchschlag erfassen oder die die Federwegauslastung erkennen.

In allen Fällen ist es bevorzugt, dass ein Feintuning jederzeit durch manuellen Eingriff des Benutzers erfolgen kann. Die Kommunikation der einzelnen Komponenten untereinander kann drahtlos sein. Möglich ist es beispielsweise, dass eine Bedieneinrichtung am Zweiradlenker angeordnet ist, die mit dem Hinterraddämpfer und/oder der Vorderradgabel drahtlos kommuniziert. Möglich ist es auch, die Daten ins Internet zu schicken und dort in einem geschützten oder gegebenenfalls in einem öffentlich zugänglichen Bereich abzulegen.

Möglich und bevorzugt ist es auch, unterschiedliche Kanäle für die Druckstufe und die Zugstufe separat vorzusehen. Die einzelnen Kanäle können separat einstellbar sein.

Es können unterschiedliche Kanäle zur High-Speed-Dämpfung und zur Low-Speed-Dämpfung vorgesehen sein.

Es kann weiterhin wenigstens ein Blow-Off-Ventil zum Schutz vor zerstörerischen Überlastungen vorgesehen sein. Einzelne mechanische Ventile können mit Shims zur Steuerung des Durchflusses ausgerüstet sein. Ein rein mechanisches Lock-Out-Ventil kann ebenfalls vorgesehen sein. Ein solches Lock-Out-Ventil kann beispielsweise über einen externen Hebel schaltbar sein.

Für bevorzugte Grundeinstellungen kann ein mechanisches Einstellorgan in Form z. B. eines Bedienhebels oder eines Einstellteils oder einer Einstellschraube oder dergleichen vorgesehen sein.

Es hat sich als schwierig herausgestellt, den gesamten Dynamikbereich über einen einzigen Dämpfungskanal bereitzustellen.

Eine andere Aufgabe ist es deshalb, eine Dämpfungseinrichtung zur Verfügung zu stellen, welche mit einfachen Maßnahmen über einen großen Einstellbereich der Dämpfereigenschaften verfügt.

Diese Aufgabe wird durch eine Dämpfereinrichtung mit den Merkmalen des Anspruchs 16 gelöst. Bevorzugte Ausgestaltungen sind in den weiteren Ansprüchen angegeben. Weitere Vorteile ergeben sich aus dem Ausführungsbeispiel.

Eine solche erfindungsgemäße Dämpfereinrichtung ist mit einer ersten Dämpferkammer und wenigstens einer zweiten Dämpferkammer ausgerüstet. Die erste Dämpferkammer und die zweite Dämpferkammer sind über wenigstens ein steuerbares Dämpfungsventil miteinander gekoppelt. Das Dämpfungsventil weist wenigstens einen Dämpfungskanal auf. In dem Dämpfungskanal ist wenigstens ein feldempfindliches rheologisches Medium vorgesehen. Dem wenigstens einen Dämpfungsventil ist wenigstens eine Felderzeugungseinrichtung zugeordnet, welche zur Erzeugung und Steuerung einer Feldstärke in dem Dämpfungskanal des Dämpfungsventils dient. Das Dämpfungsventil umfasst wenigstens einen weiteren Strömungskanal, dessen Durchfluss durch mechanische Beeinflussungsmittel beeinflussbar ist.

Auch die erfindungsgemäße Dämpfereinrichtung hat viele Vorteile. Durch den wenigstens einen zusätzlichen Strömungskanal ist eine besonders einfache und effektive Steuerung der Dämpfungseigenschaften der Dämpfereinrichtung möglich. Damit kann eine Trennung bzw. Kopplung eines mechanischen Beeinflussungsmittels und eines Beeinflussungsmittels über die Felderzeugungseinrichtung erfolgen. Die Felderzeugungseinrichtung kann gegebenenfalls einfacher und unaufwendiger gestaltet werden, da eine einzelne Felderzeugungseinrichtung nicht die gesamte Dynamik abdecken muss. Es kann eine Aufgabenteilung erfolgen, bei der die Felderzeugungseinrichtung einen Teilbereich und das mechanische Beeinflussungsmittel oder die mechanischen Beeinflussungsmittel einen anderen oder mehrere andere Teilbereiche abdecken.

Insbesondere kann wenigstens ein Strömungskanal mit einem mechanischen Beeinflussungsmittel in Reihe zu dem Dämpfungskanal vorgesehen sein. Das ermöglicht es, dass über das mechanische Beeinflussungsmittel eine generelle Begrenzung des Durchflusses erzielt wird und dass über die Felderzeugungseinrichtung der Durchfluss durch den Dämpfungskanal gezielt moduliert wird.

Vorteilhafterweise ist wenigstens ein Strömungskanal parallel zu dem Dämpfungskanal vorgesehen ist. Darüber kann ein steuerbarer Bypass realisiert werden.

In allen Ausgestaltungen kann wenigstens ein Strömungskanal mit wenigstens einem insbesondere vorbelasteten Rückschlagventil als mechanischem Beeinflussungsmittel versehen sein. Wird ein zusätzlicher paralleler Strömungskanal vorgesehen, kann dieser so auf einfache Art und Weise nur in einer Strömungsrichtung aktiv sein.

Vorzugsweise kann wenigstens ein Strömungskanal mit einem vorbelasteten Shim als mechanischem Beeinflussungsmittel versehen sein. Ein solches Shim kann eine Mehrzahl separater dünner Plättchen umfassen.

Wenigstens ein Strömungskanal kann mit einem einstellbaren Querschnitt versehen sein. Die Einstellung des Strömungsquerschnittes kann über im Stand der Technik bekannte Maßnahmen erfolgen. Beispielsweise kann der Querschnitt über ein verstellbares Schraubteil als mechanisches Beeinflussungsmittel einstellbar sein. Das Schraubteil kann insbesondere unterschiedlich weit in den Querschnitt des Strömungskanals eingeschraubt werden, um den freien Strömungsquerschnitt zu verändern.

Solche Ausgestaltungen einer Dämpfereinrichtung bieten erhebliche Vorteile, da der durch die Felderzeugungseinrichtung abzudeckende Modulationsbereich reduziert werden kann. Bei einem Lock-Out soll der Durchfluss durch das Dämpfungsventil praktisch vollständig blockiert werden. Dazu ist bei einem reinen magnetorheologischen Dämpfungsventil ein starkes Magnetfeld erforderlich. Wird aber z. B. das Lock-Out über ein zusätzliches mechanisches Beeinflussungsmittel in Form eines mechanischen Einstellmittels verwirklicht, kann der Modulationsbereich der Felderzeugungseinrichtung oder die zu erzielende Feldstärke erheblich reduziert werden, ohne die Funktionalität zu verringern.

Weitere Vorteile und Merkmale der vorliegenden Erfindung ergeben sich aus dem Ausführungsbeispiel, welches mit Bezug auf die beiliegenden Figuren erläutert wird.

In den Figuren zeigen:
- Fig. 1: eine schematische Darstellung eines Fahrrads mit einer erfindungsgemäßen Fahrwerksteuerung;
- Fig. 2: eine schematische Darstellung der Fahrwerksteuerung;
- Fig. 3: eine erfindungsgemäße Fahrwerksteuerung mit einer schematisch dargestellten geschnittenen Seitenansicht einer Dämpfereinrichtung in der Grundstellung;
- Fig. 4: eine weitere geschnittene Seitenansicht der Dämpfereinrichtung nach Fig. 3;
- Fig. 5: das Detail A aus Fig. 3 in vergrößerter Darstellung;
- Fig. 6: das Ventil der Dämpfereinrichtung nach Fig. 3 in vergrößerter perspektivischer Darstellung;
- Fig. 7: einen Querschnitt der Dämpfereinrichtung nach Fig. 3;
- Fig. 8: ein schematisches Zeitdiagramm der magnetischen Feldstärke;
- Fig. 9: eine schematische Darstellung der Daten im Betrieb bei einem Rundenfahren;
- Fig. 10: eine schematische Darstellung eines Dämpfungsventils;
- Fig. 11: eine perspektivische Ansicht einer weiteren Dämpfereinrichtung;
- Fig. 12: einen Schnitt durch den Dämpferkolben der Dämpfereinrichtung nach Fig. 11 in einer ersten Position;
- Fig. 13: einen Schnitt durch den Dämpferkolben der Dämpfereinrichtung nach Fig. 11 in einer zweiten Position; und
- Fig. 14: die Kennlinie des Ventils nach Fig. 10.

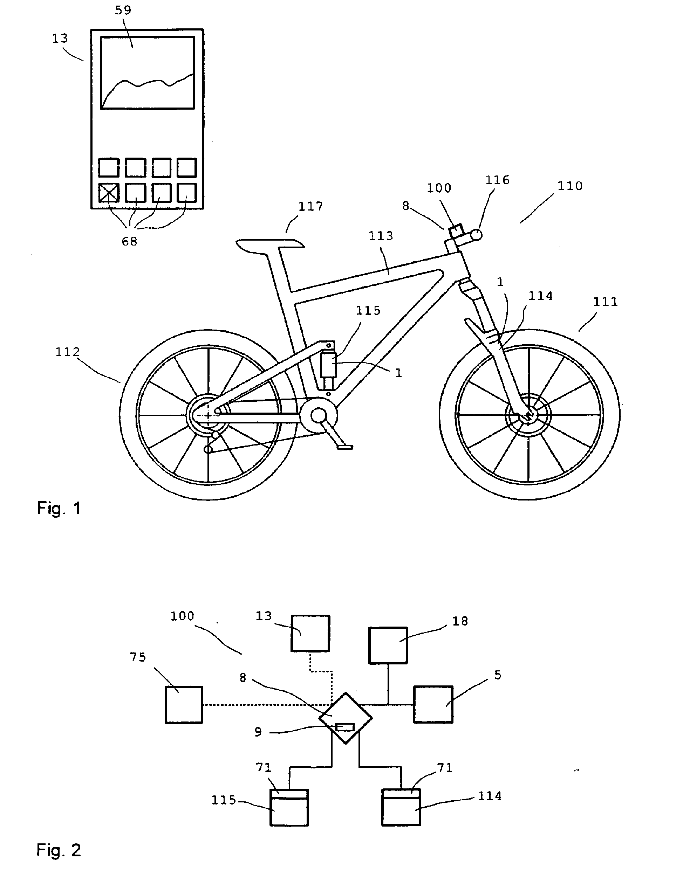

Mit Bezug auf die beiliegenden Figuren 1 bis 10 wird ein erstes Ausführungsbeispiel der Erfindung anhand einer Fahrwerksteuerung 100 mit einer Dämpfereinrichtung 1 für ein Fahrrad beschrieben.

Fig. 1 zeigt eine schematische Darstellung eines Zweirades und hier eines Fahrrades 110, welches hier als Mountainbike ausgeführt ist und mit einer Fahrwerksteuerung 100 ausgerüstet ist.

Das Fahrrad 110 weist einen Rahmen 113, ein Vorderrad 111 und ein Hinterrad 112 auf. Sowohl das Vorderrad 111 als auch das Hinterrad sind mit Speichen ausgerüstet und können über Scheibenbremsen verfügen. Eine Gangschaltung dient zur Wahl des Übersetzungsverhältnisses. Weiterhin weist das Fahrrad 110 einen Sattel 117 und einen Lenker 116 auf.

Das Vorderrad 111 verfügt über eine als Federgabel 114 ausgeführte Dämpfereinrichtung 1 und an dem Hinterrad ist eine als Hinterraddämpfer 115 ausgeführte Dämpfereinrichtung 1 vorgesehen. Die Fahrwerksteuerung 100 ist hier an dem Lenker 116 vorgesehen. Die Fahrwerksteuerung 100 kann auch in eine der Dämpfereinrichtungen 1 integriert sein oder an einem anderen Ort vorgesehen sein.

Mit der Fahrwerksteuerung 100 werden in Abhängigkeit von dem aktuell eingestellten Fahrprofil und von den sonstigen Daten, die der Fahrwerksteuerung zur Verfügung gestellt werden oder auf die die Fahrwerksteuerung 100 Zugriff hat, die Dämpfungseigenschaften der Federgabel 114 und des Hinterraddämpfers 115 eingestellt. Dabei steuert die Fahrwerksteuerung 100 sowohl die Federgabel 114 als auch den Hinterraddämpfer 115 und gegebenenfalls auch die Feder- und/oder Dämpfungseigenschaften der Sattelstütze.

Zur Bedienung steht eine Bedieneinrichtung 13 zur Verfügung, die an dem Lenker 116 angeordnet sein kann, aber z. B. auch abnehmbar ausgeführt sein kann. Je nach Ausgestaltung kann die Steuereinrichtung 8 in die Bedieneinrichtung 13 integriert oder davon separat angeordnet sein. Auf der Bedieneinrichtung 13 kann ein Display 59 vorgesehen sein, um Informationen über den aktuellen Betriebszustand, Messdaten oder sonstige Informationen zur Verfügung zu stellen.

Beispielsweise kann die Bedieneinrichtung auch als Fahrradcomputer dienen und Informationen über die aktuelle Geschwindigkeit, Durchschnittsgeschwindigkeit, Tages-, Tour-, Runden- und Gesamtkilometer, sowie über die aktuelle Position, momentane Höhe und die gefahrene Strecke oder die noch vorausliegende Strecke ausgeben. Auch die Ausgabe weiterer Auswertungen ist möglich.

Die Bedieneinrichtung 13, die in der Darstellung nach Fig. 1 der Übersichtlichkeit halber stark vergrößert und von dem Lenker entfernt abgebildet ist, weist Bedienknöpfe 68 oder dergleichen auf.

Fig. 2 zeigt eine schematische Darstellung der Fahrwerksteuerung 100, wobei die Kommunikationsverbindungen der beteiligten Komponenten mit der Steuereinrichtung 8 eingezeichnet sind. Die Bedieneinrichtung 13 wird über eine hier punktiert eingezeichnete drahtgebundene oder drahtlose Verbindung mit der Steuereinrichtung 8 verbunden. Die Verbindung muss nicht kontinuierlich bestehen, wenn die Steuereinrichtung 8 nicht Teil der Bedieneinrichtung 13 ist.

Beispielhaft sind zwei Sensoren 5 und 18 eingezeichnet, deren Messdaten als Daten 6 an die Steuereinrichtung 8 übermittelt werden. Die Sensoren können Informationen über die aktuelle Fahrbahnsituation, die aktuelle Steigung oder die aktuellen Belastungen der Dämpfereinrichtungen 1 liefern, die zur automatischen Steuerung der Fahrwerksteuerung 100 verwendet werden.

Bei erneutem Fahren einer Runde werden im Wiederholmodus gespeicherte Werte aus einer Speichereinrichtung 9 aufgerufen und die Dämpfereinrichtungen 1 werden entsprechend eingestellt.

Die Federgabel 114 und der Hinterraddämpfer 115 sind hier jeweils mit lokalen Steuereinheiten 71 ausgerüstet, die die lokale Steuerung der jeweiligen Dämpfereinrichtung 1 übernehmen. Möglich ist es auch, dass die Steuereinrichtung 8 die Dämpfereinrichtungen 1 zentral steuert. Eine Verbindung in das Internet 75 kann zeitweise, bei Bedarf oder periodisch bestehen, um dort in einem geschützten oder auch frei zugänglichen Bereich Daten 6 abzulegen, abzurufen oder anderen Personen zur Verfügung zu stellen.

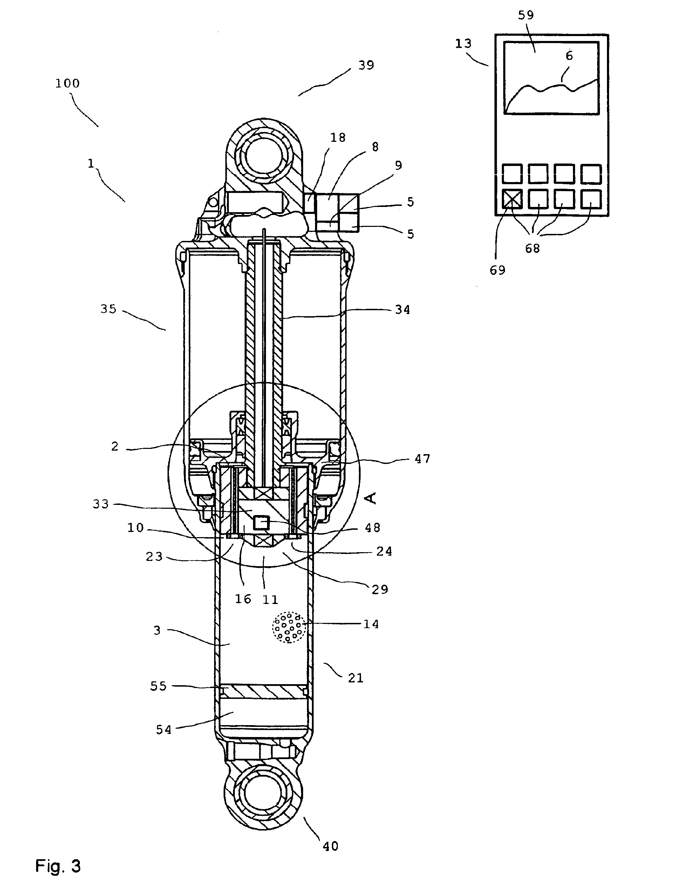

Die in Fig. 3 dargestellte Dämpfereinrichtung 1 ist als Hinterraddämpfer 115 ausgeführt und weist ein erstes Ende 39 und ein zweites Ende 40 auf, welche mittelbar oder unmittelbar mit dem Rahmen 113 bzw. dem Hinterrad 112 entsprechend verbunden werden.

Die in Fig. 1 abgebildete Federgabel 114 ist mit einer entsprechenden Dämpfereinrichtung 1 ausgerüstet. Möglich ist es auch, eine Fahrwerksteuerung 100 nur mit einer steuerbaren Federgabel 114 oder nur mit einem steuerbaren Hinterraddämpfer auszurüsten.

Eine Fahrwerksteuerung 100, welche sowohl die Federgabel 114 und auch den Hinterraddämpfer 115 steuert oder regelt erlaubt eine besonders weitgehende und optimale Steuerung der Fahreigenschaften eines damit ausgerüsteten Zwei- oder Mehrrades. Neben dem Einsatz an rein muskelbetriebenen Fahrrädern ist auch der Einsatz an Zwei- oder Mehrrädern und insbesondere an Fahrrädern mit Elektrounterstützung möglich und bevorzugt.

Die in Fig. 3 im Schnitt dargestellte Dämpfereinrichtung 1 umfasst einen Dämpfer, der hier eine erste Dämpferkammer 2 und eine zweite Dämpferkammer 3 umfasst, die von einem Dämpferkolben 29 voneinander getrennt sind. In dem Dämpferkolben 29 sind Dämpfungskanäle 23 und 24 als Strömungsverbindungen vorgesehen, die hier zur Dämpfung in der Druckstufe und in der Zugstufe dienen.

Sowohl die erste Dämpferkammer 2 als auch die zweite Dämpferkammer 3 und die Dämpfungskanäle 23 und 24 sind hier mit einem rheologischen Medium 14 gefüllt, welches hier als magnetorheologisches Fluid ausgeführt ist und ferromagnetische Partikel, wie beispielsweise Carbonyleisenpulver in einer Trägerflüssigkeit enthält. Die Trägerflüssigkeit basiert vorzugsweise auf Öl mit Zusatzstoffen wie Stabilisatoren, Frostschutzmitteln, Abriebs- und Viskositätsverbesserern. Das rheologische Medium 14 ist in Fig. 1 stark schematisch in einem Ausschnitt dargestellt.

Der Dämpferkolben 29 dient hier als Ventil bzw. Dämpfungsventil 4, mit welchem die Strömung des magnetorheologischen Fluids 14 von der ersten Dämpferkammer 2 zu der zweiten Dämpferkammer 3 über die Dämpfungskanäle 23 und 24 gesteuert wird. Durch ein Magnetfeld der Felderzeugungseinrichtung 11 wird die Viskosität des magnetorheologischen Fluids in den Dämpfungskanälen 23 und 24 beeinflusst und mit steigender Feldstärke wird die Bewegung des Kolbens 29 stärker gedämpft. Zusätzlich zu der Beeinflussung über ein Magnetfeld ist noch ein Beeinflussungsmittel 10 vorgesehen. Diese ist als Steuerscheibe oder dergleichen ausgebildet und kann die Dämpfungskanäle 23 und 24 auf Wunsch vollständig verschließen, um z. B. ein Lock-Out zu realisieren. Um eine Überbelastung bei aktiviertem Lock-Out zu vermeiden, können zusätzlich Shims oder dergleichen vorgesehen sein, um bei besonders starken Stößen die Dämpfungskanäle wieder zu öffnen. Das Beeinflussungsmittel 10 kann drehbar vorgesehen sein und automatisch oder manuell von der Schließposition in die geöffnete Stellung und wieder zurück überführbar sein.

Eine Kolbenstange 34 schließt sich an den Dämpferkolben 29 an und führt durch eine hier als Gasfeder ausgeführte Federeinrichtung 35. Die Federeinrichtung 35 umfasst eine erste Federkammer 41 und eine zweite Federkammer 42, die von einem Kolben 47 getrennt sind.

Die Fahrwerksteuerung 100 umfasst jedenfalls eine elektrische oder elektronische Steuereinrichtung 8, die insbesondere auch über einen Mikroprozessor oder Mikrocomputer verfügen kann. Die Steuereinrichtung 8 kann eine Speichereinrichtung 9 umfassen, in der Daten, Steuerprogramme, Programmabläufe, Steuerdaten, Messdaten, Daten über das Fahrrad und über die eingesetzten Dämpfereinrichtungen 1, sowie persönliche Daten des Benutzers abgelegt sind.

Die Steuereinrichtung 8 kann über eine Kommunikationseinrichtung, wie ein Modem oder über eine drahtgebundene oder drahtlose Schnittstelle oder eine eigenständige Internetverbindung über spezielle oder standardisierte Schnittstellen und Funkverbindungen verfügen.

Wie in Fig. 2 dargestellt, kann die Steuerung lokal oder zentral erfolgen.

Der Steuereinrichtung 8 ist wenigstens ein Sensor 5 zur Erfassung von Daten zugeordnet. Solche Daten 6 können beispielsweise Positionsdaten 61 eines GPS-Sensors 18 umfassen, die mit dem zugehörigen Zeitstempel in der Speichereinrichtung 9 abgelegt werden. Auch Daten eines Sensors 48 zur Erfassung der Feldstärke des Magnetfeldes der Felderzeugungseinrichtung 11 können erfasst, verarbeitet und gespeichert werden.

Als Daten 6 werden weiterhin Messdaten über den aktuellen Zustand 7 oder den Betriebszustand erfasst. Beispielsweise können Daten über den aktuellen Einfederungs- oder Ausfederzustand erfasst werden. Die Daten über den Zustand 7 können aber insbesondere auch Daten über die Position des Fahrrades enthalten oder repräsentieren oder aber Daten über den Zustand der Fahrbahn enthalten.

Bevorzugt sind auch die Erfassung und Speicherung von Bediendaten 60, von Geländedaten 62, von Daten über die Stärke von Stößen, über den Aus- und Einfederungszustand der Dämpfereinrichtung 1 als Daten 6. Vorzugsweise sind auch Daten über die Geschwindigkeit des Fahrrads, gegebenenfalls das Gewicht des Fahrrads und des Fahrers in der Speichereinrichtung 9 abgelegt.

Eine Bedieneinrichtung 13 ist zur Bedienung vorgesehen. Die Bedieneinrichtung 13 ist datenmäßig wenigstens zeitweise mit der Dämpfereinrichtung 1 verbunden.

Die Bedieneinrichtung 13 kann Schaltflächen bzw. Bedienköpfe 68 zur Bedienung und wenigstens ein Display 59 zur Ausgabe visueller Informationen aufweisen. Eine Bedienung ist auch über das Touchpanel möglich, da das Display 59 als berührungsempfindliche Fläche ausgeführt ist, die beispielsweise neben Druckberührungen an Einzelpunkten auch Gesten und dergleichen erkennen kann. Möglich ist auch eine optische oder kapazitive Erkennung von Benutzerhandlungen. Auf dem Display 59 kann der zeitliche Verlauf von erfassten Daten 6 oder von Signalen 50 ausgegeben werden, um dem Benutzer eine direkte Auswertung zu ermöglichen.

Die Bedieneinrichtung 13 kann Schnittstellen zur Übergabe von Daten und Programmen aufweisen. Die Schnittstellen können kabelgebunden oder drahtlos arbeiten, sodass drahtgebundene und/oder drahtlose Datenverbindungen möglich sind. Neben speziellen Verbindungsarten sind auch Verbindungen über serielle, parallele oder Netzwerkschnittstellen möglich. Die Bedieneinrichtung 13 und auch die Steuereinrichtung 8 können gegebenenfalls über Infrarot, Bluetooth, Wireless Lan, GPRS, UMTS, ANT+ Ethernet, Glasfaser und dergleichen mehr Verbindungen herstellen und darüber Daten austauschen. Möglicherweise kann als Bedieneinrichtung 13 auch ein handgehaltener oder sonstiger Computer oder ein Mobiltelefon oder dergleichen verwendet werden. Auf einem solchen Gerät kann auch ein Programm zur generellen Steuerung ablaufen.

Möglich ist es auch, dass die Steuerungseinrichtung 8 in der Bedieneinrichtung 13 angeordnet oder dieser zugeordnet ist. Während die Bedieneinrichtung 13 nicht ständigen Kontakt zu der Dämpfereinrichtung 1 oder der Steuereinrichtung 8 haben muss, sollte die Steuereinrichtung jedenfalls im Betrieb ständigen Kontakt zu der Dämpfereinrichtung 1 haben.

An dem ersten Ende 39 kann ein manuelles Einstellorgan vorgesehen sein, um z. B. generelle Änderungen an der Federcharakteristik vorzunehmen oder um Grundeinstellungen vorzugeben. Das Einstellorgan kann z. B. Drehteile als Einstellelemente umfassen. Vorzugsweise werden die aktuellen Einstellungen und auch die Grundeinstellungen über die Steuereinrichtung 8 gesteuert.

Die Speichereinrichtung 9 verfügt vorzugsweise über einen nichtflüchtigen Speicher, um Steuer- und Benutzerdaten dauerhaft auch ohne Stromzufuhr zu speichern.

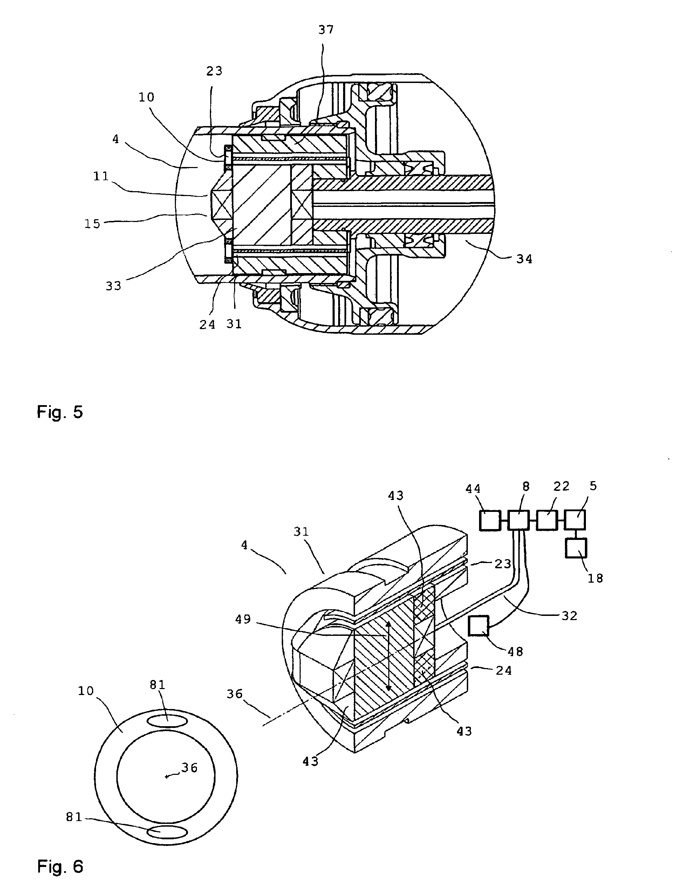

An dem Ende der zentralen Kolbenstange 34 ist der Dämpferkolben 29 vorgesehen, der eine Felderzeugungseinrichtung 11 enthält. Die Felderzeugungseinrichtung 11 kann wenigstens eine elektrische Spule 15 und wenigstens einen Dauermagneten 16 umfassen. Der Dauermagnet 16 kann wenigstens einen Kern 33 umfassen (vgl. Fig. 5).

Zur Abdichtung des Dämpferkolbens 18 in dem Dämpfergehäuse 17 kann ein Kolbenring als Dichtung vorgesehen sein. Es ist aber auch möglich, dass das Magnetfeld der Felderzeugungseinrichtung 11 für eine vollständige Abdichtung zum Dämpfergehäuse 17 sorgt, da das Magnetfeld der Felderzeugungseinrichtung 11 oder ein weiteres Magnetfeld eine Verkettung der Partikel in dem magnetorheologischen Fluid bewirkt, sodass eine ausreichende Abdichtung bewirkbar ist.

Der Kern 33 des Dauermagneten 16 ist von einer Spule 15 als Felderzeugungseinrichtung 11 umgeben. Der Kern 33 besteht zumindest teilweise aus einem hartmagnetischen Material mit einer Koerzitivfeldstärke, die größer als 1000 A/m und insbesondere größer als 10000 A/m ist. Hier besteht der Kern 33 vollständig aus Alnico, welches eine hohe Koerzitivfeldstärke aufweist und sehr temperaturstabil ist. Es ist von Vorteil, wenn nur ein oder mehrere Teile des Kerns hartmagnetisch sind, um den Aufwand für das Magnetisieren klein zu halten.

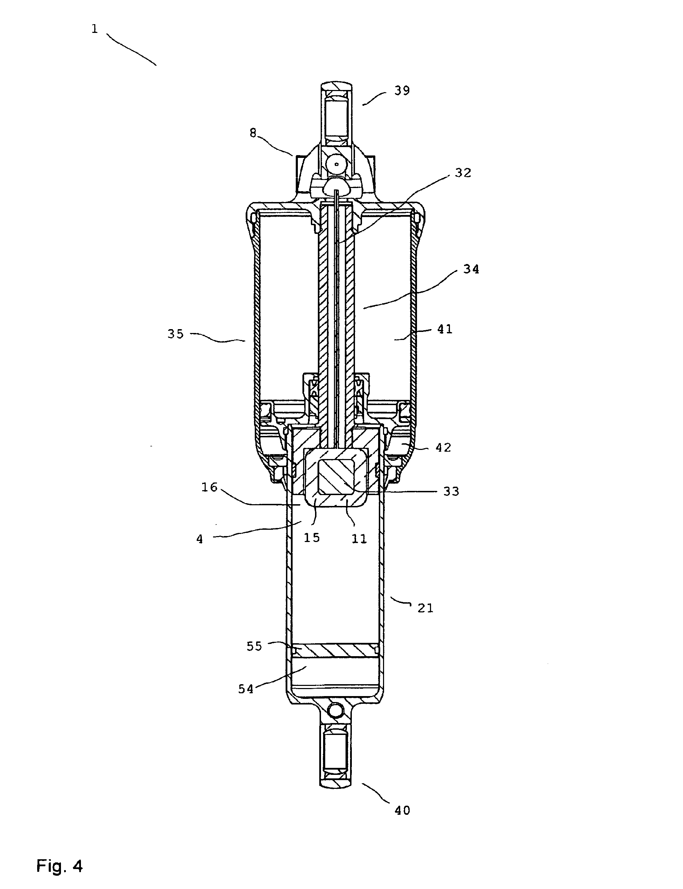

In Fig. 4 ist ein Längsschnitt durch die Dämpfereinrichtung 1 dargestellt, wobei der Längsschnitt hier rechtwinklig zu der Darstellung gemäß Fig. 1 gewählt wurde.

An dem als Ventil bzw. Dämpfungsventil 4 ausgeführten Dämpferkolben 29 ist in der Darstellung gemäß Fig. 2 gut erkennbar, wie die elektrische Spule 15 den hartmagnetischen Kern 33 des Dauermagneten 16 umgibt. Dadurch wird sichergestellt, dass bei Erzeugung eines magnetischen Impulses 17 durch die elektrische Spule 15 eine maximale Wirkung auf den hartmagnetischen Kern 33 erzeugt wird, sodass eine zuverlässige Einstellung und Veränderung der Feldstärke 19 des Dauermagneten 16 erreicht wird.

In der Darstellung gemäß Fig. 2 sind die elektrischen Leitungen 32 zur Steuerung und Energieübertragung klar erkennbar. Mit den Leitungen 32 wird die benötigte Energie für die elektrische Spule 15 zugeführt und die Steuerung vorgenommen. Gegebenenfalls ist es auch möglich, dass die Regeleinrichtung oder Steuereinrichtung 8 innerhalb der Dämpfereinrichtung 1 vorgesehen ist, sodass die Leitungen 21 nur zur Energiezufuhr dienen.

Die Ausgleichsfeder 54 ist typischerweise mit Gas gefüllt und wird über einen Trennkolben 55 von der Dämpferkammer 3 getrennt. Die Ausgleichsfeder 54 dient zum Ausgleich des Volumens, wenn die Kolbenstange 34 in das Dämpfergehäuse 21 eintaucht, da dann das gesamte dem magnetorheologischen Fluid 14 zur Verfügung stehende Volumen durch den eingeschobenen Anteil der Kolbenstange 34 verringert wird.

In Fig. 5 ist eine vergrößerte Darstellung des Details A aus Fig. 3 abgebildet.

Deutlich erkennbar sind die Dämpfungskanäle 23 und 24, mit denen die Strömungsverbindung zwischen der ersten Dämpferkammer 2 und der zweiten Dämpferkammer 3 zur Verfügung gestellt wird.

Das hier als Dämpferkolben 29 ausgeführte Ventil 4 weist zentral in der Mitte den Kern 33 aus hartmagnetischem Material auf, der ringsum von einer elektrischen Spule 15 umgeben ist. An den Stirnseiten des Kerns 33 sind die Dämpfungskanäle 23 und 24 vorgesehen. Radial wird der Kern 33 schließlich von einem Ringleiter 37 umgeben, der aus einem magnetisch leitenden Material besteht. Vorzugsweise besteht der Ringleiter 37 aus einem weichmagnetischen Material. Gegebenenfalls kann er wenigstens teilweise auch aus einem hartmagnetischen Material bestehen.

Durch den Ringleiter 37 wird das magnetische Feld des Dauermagneten 16 mit dem hartmagnetischen Kern 33 geschlossen. Dabei verlaufen die Feldlinien des magnetischen Feldes quer zu den Dämpfungskanälen 23 und 24, sodass eine maximale Wirkung auf das magnetorheologische Fluid 14 erzielbar ist.

Die Zeichnung zeigt eine Ausführungsvariante, bei der die Dämpfungskanäle 23 und 24 und der Ringleiter 37 über die ganze Kolbenlänge gehen, der Kern 33 aber nur ungefähr halb so lang ist. Der Kraftbereich des Dämpfers kann über die Länge der Dämpfungskanäle 23 und 24 und über die Stärke des Magnetfeldes eingestellt werden. Ein Lock-Out kann über das Beeinflussungsmittel 10 eingestellt werden, in dem das als Steuerscheibe oder dergleichen ausgeführte Beeinflussungsmittel 10 mit den Öffnungen 81 von den Dämpfungskanälen 23 und 24 weggedreht wird. Der Vorteil eines zusätzlich in Reihe geschalteten Beeinflussungsmittels 10 liegt darin, dass die maximale Feldstärke 51 der Felderzeugungseinrichtung 11 erheblich geringer sein kann.

In der dargestellten Ausführung konzentriert sich das Feld des Kerns 33 auf einen Teil der Dämpfungskanäle 23 und 24. Über andere Kernformen lassen sich andere Kraftbereiche und Dämpferkennlinien einstellen.

Außerdem wird ein Ventil bzw. Dämpfungsventil 4 dargestellt, das beim ausfahrenden Dämpfer einen Teil der Dämpfungskanäle 23 und 24 bedarfsweise verschließt und so eine Unterscheidung von Zug- und Druckstufe des Dämpfers ermöglicht. Über eine Zwischenwand 25 können die Dämpfungskanäle 23 bzw. 24 jeweils in Teilkanäle 26 und 27 aufgeteilt werden, wodurch die Wirksamkeit noch erhöht wird (vgl. auch Fig. 5 und die dortige Beschreibung). Als Ventil kann beispielsweise ein Shim nach dem Stand der Technik verwendet werden, das eine geringe Federkraft aufweist.

Über separate Shims oder auch über Einwegventile kann eine separate Dämpfung in der Zug- und in der Druckstufe erfolgen. Beispielsweise kann ein Kanal 23 nur für die Dämpfung in der Zugstufe und es kann ein Kanal 24 nur für die Dämpfung in der Druckstufe vorgesehen sein (oder umgekehrt). Einwegventile an den Dämpfungskanälen 23 und 24 verhindern dabei vorzugsweise den Durchfluss der entsprechenden Kanäle in der jeweils anderen Dämpfungsstufe. Möglich ist es auch, zwei unterschiedliche Dämpfungsventile 4 vorzusehen, von denen ein Dämpfungsventil 4 wenigstens einen Kanal für die Dämpfung in der Zugstufe und ein Dämpfungsventil 4 wenigstens einen Dämpfungskanal für die Dämpfung in der Druckstufe aufweist. Darüber ist eine einfache und separate Steuerung der Dämpfungseigenschaften in der Zug- und Druckstufe möglich.

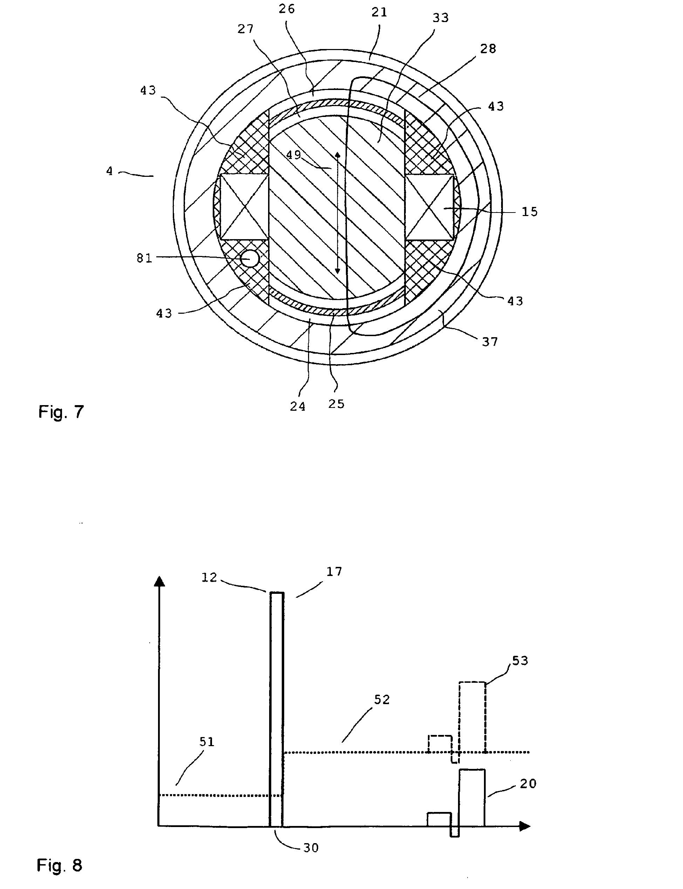

Es ist weiterhin möglich, dass wenigstens ein separater Strömungskanal 81 vorgesehen wird. Ein solcher zusätzlicher Strömungskanal 81 kann vorzugsweise parallel zu den Dämpfungskanälen 23 und 24 geschaltet sein und ist in Fig. 7 eingezeichnet. Dort ist der zusätzliche Strömungskanal 81 in einem Bereich des Isolators 43 vorgesehen, sodass der Querschnitt des Strömungskanals 81 gar nicht oder nur gering durch ein Feld der Felderzeugungseinrichtung 11 beeinflusst wird. Wenn der Strömungskanal 81 für eine Blow-Off-Funktion vorgesehen ist, wird ein Ende des Strömungskanals 81 mit einem Rückschlagventil, Shim oder dergleichen versehen, welches bei Bedarf automatisch öffnet. Ohne Ventilfunktion dient der Strömungskanal 81 als Bypass, um ein gutes Ansprechverhalten zu erzielen.

In Fig. 6 ist eine leicht perspektivische und geschnittene Darstellung des Dämpfungsventils 4 dargestellt, wobei in dem Kern 33 die Verbindungsachse 49 von Nordpol und Südpol des Kerns 33 angedeutet ist. Zur Abdichtung und zur Lenkung des magnetischen Feldes des Kerns 33 sind in den seitlichen Bereichen magnetische Isolatoren 43 vorgesehen, sodass das durch den Kern 33 erzeugte magnetische Feld nicht seitlich abgelenkt wird, sondern im Wesentlichen senkrecht durch die Dämpfungskanäle 23 und 24 durchtritt. Die Dämpfungskanäle 23 und 24 laufen hier etwa parallel zu der Längsachse 36 des Dämpferkolbens 29. In anderen Ausgestaltungen können die Dämpfungskanäle 23 und 24 auch auf der Außenseite 31 des Dämpferkolbens 29 vorgesehen sein.

Schematisch eingezeichnet ist in Fig. 4 eine Sensoreinrichtung, die einen oder mehrere Sensoren 5, 18 und 48 etc. umfassen kann. Bevorzugt ist ein Sensor 48 zur Detektion der Stärke des magnetischen Feldes vorgesehen, um ein Maß für die Stärke des von dem Kern 33 erzeugten magnetischen Feldes in den Dämpfungskanälen 23 und 24 zu bestimmen. Als weitere Sensoren sind Temperatursensoren, Viskositätssensoren, Drucksensoren Weg- und Beschleunigungs- und Neigungssensoren und dergleichen möglich. Die Sensoreinrichtung ist mit der Steuereinrichtung 8 zur Steuerung der magnetischen Impulse, die über die Leitungen 32 ausgegeben werden, verbunden.

Die für einen magnetischen Impuls 17 benötigte elektrische Energie wird über eine Energiespeichereinrichtung 22 zur Verfügung gestellt. Über eine Energiespeichereinrichtung 22 wie z. B. einen Kondensator oder eine Batterie ist es möglich, auch bei einer Stromversorgung, die nur über eine geringe Spannung und eine geringe Leistung verfügt, die benötigte Energie für einen magnetischen Impuls 17 zur Verfügung zu stellen, um eine Magnetisierung oder Entmagnetisierung des Kerns 33 zu erzielen. Die Stromversorgung ist auch durch einen Akku eines E-Bikes, einen Generator, Rekuperierung, einen Dynamo oder insbesondere auch einen Nabendynamo möglich.

Eine Schwingkreiseinrichtung 44 kann vorgesehen sein, um eine definierte Entmagnetisierung des Kerns 33 zu gewährleisten. Dabei wird ein schwächer werdendes magnetisches Wechselfeld an den Kern 33 angelegt, womit eine Entmagnetisierung erreicht wird.

Fig. 5 zeigt einen Querschnitt durch die Dämpfereinrichtung 1 mit dem Dämpfungsventil 4, wobei zur Übersichtlichkeit eine Feldlinie 28 des von dem Kern 33 erzeugten Magnetfeldes eingezeichnet ist.

Klar erkennbar ist, dass in dem Bereich der Dämpfungskanäle 23 und 24 die Feldlinien 28 nahezu senkrecht (normal zu den Polflächen) durch den Spalt hindurchtreten. Dadurch wird eine Verkettung der magnetorheologischen Partikel entlang der Feldlinien 28 bewirkt, wodurch in Strömungsrichtung der Dämpfungskanäle 23 und 24 eine maximale Dämpfung erzielt wird.

Der zentrale Kern 33 besteht hier aus Alnico als einem hartmagnetischen Material und weist eine Polarisierung von Nordpol in Richtung des Südpols entlang der Verbindungsachse 49 auf. In Richtung der Enden der Verbindungsachse 49 sind die Dämpfungskanäle 23 und 24 ausgerichtet, die hier spaltartig ausgebildet sind und durch Zwischenwände bzw. Fächerelemente 25 in Richtung der Spaltbreite nochmals unterteilt sind, sodass Teilkanäle 26 und 27 an den Dämpfungskanälen 23 und 24 entstehen.

Die Zwischenwand 25 besteht vorzugsweise aus einem guten magnetischen Leiter, sodass die Zwischenwand nur einen geringen magnetischen Widerstand darstellt. Gegebenenfalls können die Zwischenwände 25 auch aus hartmagnetischem Material bestehen, welche durch die magnetischen Impulse 17 der Spule 15 dauerhaft - aber wieder veränderbar - magnetisiert werden.

Auf den beiden Seiten des Kerns 33 ist in der Darstellung gemäß Fig. 7 die Spule 15 erkennbar, die den Kern 33 vollständig umgibt. Zusätzlich sind an den Seiten noch magnetische Isolatoren 43 vorgesehen, die in diesen Bereichen die Stärke des dort vorhandenen Magnetfeldes stark reduzieren, da die Magnetfeldlinien dem geringsten Widerstand folgen und sich durch den Kern 33 und den Ringleiter 37 erstrecken.

In bevorzugten Ausgestaltungen können die Querschnittsflächen der Dämpfungskanäle 23 und 24 beispielsweise zusätzlich noch durch eine mechanische Verstellung einstellbar sein.

Das Dämpfungsventil 4 wird hier durch den Ringleiter 37, den darin aufgenommenen Kern 33, die Spule 15 und die magnetischen Isolatoren 43, sowie die Dämpfungskanäle 23 und 24 und den zusätzlichen Strömungskanal 81 gebildet.

Im hier dargestellten Ausführungsbeispiel ist das Dämpfungsventil 4 als Dämpferkolben 29 in dem Dämpfergehäuse 21 längsverschieblich angeordnet.

Vorteilhaft ist es, nur den Anteil des Dauermagneten 16 aus Alnico zu fertigen, der notwendig ist, um eine bestimmte Feldstärke und Flussdichte aufrecht erhalten zu können. Beispielsweise kann nur ein Teil des Kerns 33 aus Alnico sein und der Rest aus einem anderen ferromagnetischen Material bestehen.

Denkbar ist auch, den gesamten Dauermagneten 16 aus einem Material mit hartmagnetischen Eigenschaften zu fertigen. Werden beispielsweise in Fig. 7 der Kern 33 und der Ringleiter 37 großteils aus hartmagnetischem Material gefertigt, kann dessen Koerzitivfeldstärke kleiner sein, als wenn nur ein Teil des Kerns 33 aus hartmagnetischem Material besteht.

Fig. 8 zeigt die Funktionsweise bei der Veränderung oder Einstellung einer gewünschten Magnetfeldstärke 19, von einer ersten Magnetfeldstärke 51 auf eine zweite Magnetfeldstärke 52. Dargestellt ist über der Zeit die Stärke des Magnetfeldes 19 und dabei ist die Feldstärke des Kerns 51 gepunktet dargestellt, während das von der elektrischen Spule 15 erzeugte magnetische Feld 12 durchgezogen eingezeichnet ist.

Klar erkennbar ist, dass die von der elektrischen Spule 15 erzeugte Magnetfeldstärke 12 über den größten Teil der Zeit Null ist, da ein von der elektrischen Spule 15 erzeugtes Magnetfeld nicht für den normalen Betrieb nötig ist und somit dort keine elektrische Energie benötigt wird.

Ein von der elektrischen Spule 15 erzeugtes Magnetfeld 12 wird nur benötigt, wenn eine Veränderung der Magnetfeldstärke des Dauermagneten 16 angestrebt wird.

So liegt die von dem Dauermagneten 16 erzeugte magnetische Feldstärke 51 zunächst bei einem geringeren Wert, bis ein magnetischer Impuls 17 durch die elektrische Spule 15 ausgelöst wird, wobei die von der elektrischen Spule 15 erzeugte Magnetfeldstärke 12 eine entsprechende Stärke aufweist, um den hartmagnetischen Kern 33 dauerhaft mit einer entsprechenden Stärke zu magnetisieren.

Beispielsweise kann die magnetische Feldstärke des Dauermagneten 16 von einer zunächst geringeren Feldstärke 51 auf eine entsprechend höhere Feldstärke 52 erhöht werden, um eine stärkere Dämpfung zu bewirken bzw. um das Dämpfungsventil 4 zu schließen.

Während die Impulslänge 30 für den magnetischen Impuls 17 nur sehr kurz ist und im Bereich von einigen Millisekunden liegen kann, weist der Dauermagnet 16 anschließend dauerhaft die hohe magnetische Feldstärke 52 auf, die bei einer entsprechenden Magnetfeldstärke 12 des magnetischen Impulses 17 auch bis in die Sättigung des verwendeten hartmagnetischen Materials reichen kann. Die von der Spule 15 während des magnetischen Impulses 17 erzeugte Magnetfeldstärke 12 bewirkt eine dauerhafte Änderung der magnetischen Feldstärke des Magneten 16 von zunächst einer magnetische Feldstärke 51 zu einer magnetischen Feldstärke 52.

Aus Fig. 8 ist ersichtlich, dass die Energieeinsparung gegenüber einem herkömmlichen System, das dauernd Strom benötigt, von der Häufigkeit der Ummagnetisierungen abhängt. Doch auch bei häufigem Ummagnetisieren, beispielsweise im Sekundentakt, liegt der Strombedarf geringer als bei einem vergleichbaren Dämpfer nach dem Stand der Technik. Wird die Ummagnetisierung nur bei Bedarf betätigt, also beispielsweise bei einem Wechsel der Fahrbahnbeschaffenheit, tritt der Vorteil gegenüber anderen Systemen noch erheblich deutlicher zu Tage.

Bei einer entsprechend geringeren Magnetisierung des Kerns 33 wird ein entsprechend geringes magnetisches Feld 19 erzeugt. Eine Entmagnetisierung kann - wie bereits beschrieben - durch ein schwächer werdendes magnetisches Wechselfeld erzeugt werden.

Weiterhin zeigt Fig. 8 im rechten Teil des Diagramms schematisch noch eine Situation, bei der die Spule 15 auch zur zeitlichen Modifikation des wirksamen Magnetfeldes 53 verwendet wird. Wird die Spule 15 nur mit einem geringen und z.B. zeitlich variablen Magnetfeld 20 beaufschlagt, welches in Fig. 8 im rechten Teil durchgezogen eingezeichnet ist, so wird das insgesamt wirksame Magnetfeld 53 dementsprechend beeinflusst und je nach Polarisation verstärkt oder geschwächt. Damit ist auch eine dynamische Beeinflussung des wirkenden magnetischen Feldes 53 möglich, ohne die dauerhafte Magnetisierung des Dauermagneten 16 (Feldstärke 52) zu ändern.

Möglich ist es auch, zwei oder mehr elektrische Spulen in Verbindung mit entsprechenden Kernen einzusetzen.

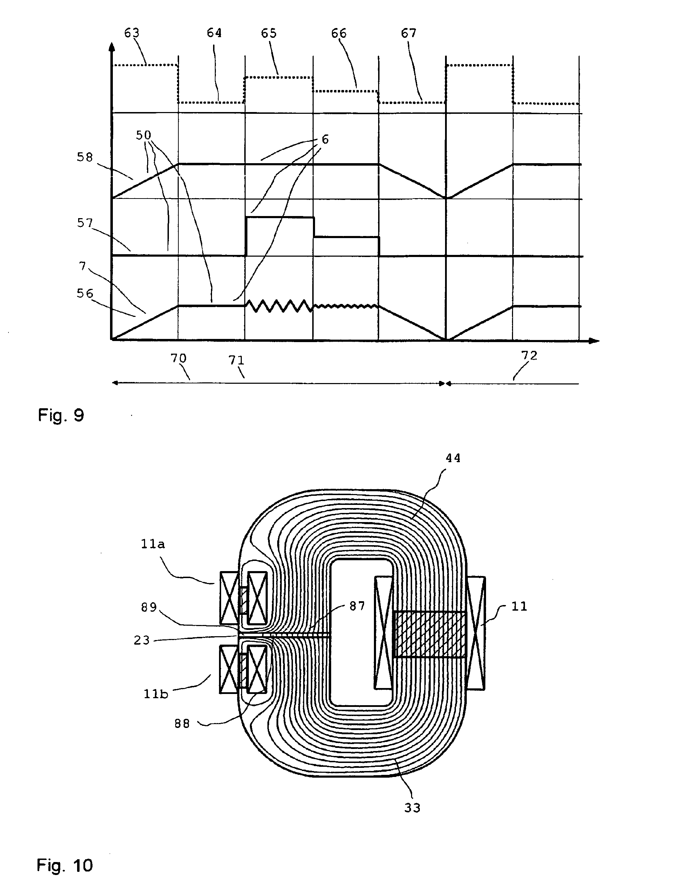

Fig. 9 zeigt ein schematisches Diagramm verschiedener Daten 6 und Signale 50 über einer Wegstrecke 70. Die Wegstrecke 70 besteht hier aus einer ersten Runde 71 und einer nur teilweise dargestellten Runde 72. In einem ersten Durchlauf kann in einem "Lernmodus" die Steuereinrichtung 8 Daten 6 und ausgegebene Signale 50 erfassen und abspeichern. Dazu gehören auch die Signale 50, mit denen die Dämpfungseinrichtung 1 bzw. das Dämpfungsventil 4 gesteuert werden. Gespeichert werden auch die Bediendaten 60.

Die gespeicherten Daten 6 können bei Durchlauf einer zweiten Runde 72 abgerufen werden und die Dämpfungseinrichtung 1 kann analog gesteuert werden wie in der ersten Runde, ohne dass der Benutzer an der Bedieneinrichtung 13 Eingaben vornehmen muss.

Im Lernmodus werden alle Daten wie Messdaten und Bedieneingaben gespeichert. Im Wiederholmodus werden die Daten und zugehörigen Signale 50 in Abhängigkeit von der jeweiligen Position abgerufen und die Signale 50 werden ohne erneute Eingaben des Benutzers zur Steuerung der Steuerungseinrichtung 13 verwendet. Eine "Override"-Funktion kann vorgesehen sein, die auch im Wiederholmodus alle Bedieneingaben zulässt und vorrangig berücksichtigt und für die nächste Runde speichert. Die Runden 71 und 72 müssen nicht direkt nacheinander gefahren werden. Möglich ist es auch, dass die Runde 71 an einem ersten Tag und die Runde 72 zu einer späteren Uhrzeit am gleichen Tag oder an einem anderen Tag gefahren wird.

Möglich und bevorzugt ist es auch, dass die abgespeicherten Daten einer Runde 71 zu einer anderen Fahrwerksteuerung 100 übertragen werden, um dort als Grundlage für die Steuerung zu dienen. Beispielsweise können der Hersteller, Vereine oder Einzelpersonen Daten inkl. der zugehörigen Signale 50 speichern und Dritten zur Verfügung stellen.

In Fig. 9 sind konkret verschiedene Verläufe über der Wegstrecke 70 dargestellt. Die unterste Kurve 56 zeigt beispielsweise ein stark schematisches Höhenprofil der Wegstrecke 70. Die Wegstrecke beginnt mit einer Steigung, gefolgt von einem flachen und ebenen Wegstück. Daran schließt sich ein Abschnitt mit stärkeren Stößen und schließlich ein Abschnitt mit kleineren Stößen an, bevor ein Gefälle folgt und der Ausgangspunkt wieder erreicht wird und die Runde 72 beginnt.

Die Kurve 57 zeigt schematisch die Intensität der Stöße über dem Streckenverlauf. Deutlich erkennbar ist der Bereich der starken Stöße auf dem Wegabschnitt mit einer hohen mittleren Stoßintensität. Auf dem Wegabschnitt mit kleineren Stößen ergibt sich ein Bereich mittlerer Stoßintensität. Im Bereich der Steigung, des ebenen Wegabschnitts und des Gefälles sind in der hier nur stark schematischen Abbildung keine relevanten Stöße eingezeichnet bzw. zu erkennen.

In Kurve 58 sind die Höhendaten des GPS-Sensors 18 abgebildet, der die jeweilige Höhe entweder direkt ermittelt oder aber die Höhendaten aus im Speicher abgelegten Kartendaten Daten über die ermittelte Ortsposition ableitet. Anhand der Kurve 58 kann die Steuereinrichtung 8 Steigungen oder Gefälle detektieren. In Verbindung mit abgelegtem oder über eine Datenverbindung zugänglichen Kartenmaterial mit Höhenprofil kann schon im voraus auf die Länge einer Steigung oder eines Gefälles geschlossen werden, wenn der zu nehmende Weg vorbekannt ist.

Nach einer Fahrt oder nach einem vorgegebenen oder wählbaren Zeitintervall oder auch auf direkten Befehl hin kann eine Analyse der Zustände des Feder- und Dämpfungssystems durchgeführt werden. Wird dabei beispielsweise festgestellt, dass der volle Federweg gar nicht oder nur sehr selten benutzt wurde, kann die Steuerungseinrichtung automatisch die Empfehlung ausgeben, die Federhärte des Systems zu verringern. Umgekehrt kann eine entsprechende Erhöhung der Federhärte oder auch der Dämpfung empfohlen werden.

Bei der Fahrt können unterschiedlichste Parameter erfasst und abgespeichert werden. Insbesondere können Daten bzw. Kurven über den Hub der Dämpfereinrichtung, über die gefahrene Geschwindigkeit, die Beschleunigungen in Fahrtrichtung und senkrecht oder quer dazu, sowie über Neigung des Bodens, die Anzahl und die jeweilige Position der Veränderungen der Dämpfungseigenschaften sowie über die Trittfrequenz, das jeweils aktuelle Übersetzungsverhältnis der Gangschaltung, die Herzfrequenz des Benutzers etc. abgelegt werden.

Wenn die Fahrwerksteuerung beispielsweise anhand der Trittfrequenz, der Anzahl und Stärke der Dämpfungen, der aktuellen Geschwindigkeit und anhand der Steigung und gegebenenfalls der Herzfrequenz des Benutzers auf eine Ermüdung des Benutzers Rückschlüsse zieht, kann eine stärkere Dämpfung eingestellt werden, um dem Benutzer ein bequemeres Fahren zu ermöglichen. Das kann beispielsweise der Fall sein, wenn nur eine geringe Geschwindigkeit mit relativ hoher Herzfrequenz gefahren wird, obwohl das Gelände eben und die Fahrbahn glatt ist. Umgekehrt kann bei hohen Fahrgeschwindigkeiten in einem ebenen Gelände auch ohne Auswertung der Dämpfungsvorgänge auf einen guten Fahrbahnbelag geschlossen werden, sodass die Dämpfung entsprechend eingestellt werden kann.

Aus dem Geschwindigkeitsprofil kann auf die aktuelle Fahrsituation rückgeschlossen werden. Wird eine Strecke einmal oder regelmäßig mit hoher Geschwindigkeit gefahren, wird sich der Benutzer dort beim Training oder in einem Rennen befinden, sodass die Fahrwerksteuerung entsprechende Bedingungen einstellt. Fährt der Benutzer die gleiche Strecke nun ein anderes Mal langsam, so kann der Benutzer beispielsweise nach Abschluss der Trainingsrunde entspannt nach Hause fahren, wozu andere Dämpfungseigenschaften sinnvoller oder einfacher bequemer sein können.

Die Kurve mit den Signalen 63 bis 67 zeigt die Signale 50, die von der Steuereinrichtung 8 ausgegeben werden. Die einzelnen Signale 63 bis 67 können dabei automatisch von der Steuereinrichtung 8 ermittelt oder von dem Benutzer eingegeben werden. Eine automatische Ermittlung kann aufgrund zuvor gespeicherter Daten 6 erfolgen.

Das Signal 63 wird hier ausgegeben, welches beispielsweise ein Lockout der Dämpfereinrichtung 1 bewirkt, um bei der Steigung des ersten Wegabschnitts ein dort unnötiges Dämpfen zu vermeiden. Gleichzeitig kann mit dem Signal 63 eine Federgabel als Dämpfungseinrichtung 1 einfedern, um dem Benutzer auf einer steilen Bergauffahrt eine angenehmere Sitzposition zu ermöglichen.

Das Signal 63 kann aufgrund einer entsprechenden Benutzereingabe oder aufgrund automatisch ermittelter Werte ausgegeben werden. Erkennt die Fahrwerksteuerung 100 beispielsweise mit dem GPS-Sensor 18 die Steigung und die Stärke und Länge der Steigung über abgespeicherte Kartendaten oder eine zuvor gefahrene Runde 71, kann das Signal 63 zum Lockout bzw. Blockieren der Dämpfereinrichtung 1 mit eventuell gleichzeitiger Absenkung der Vorderradgabel auch automatisch ausgegeben werden.

Gegebenenfalls wird vor automatischen Änderungen der Dämpfereinstellungen ein optisches und/oder akustisches und/oder sonstiges Signal durch die Steuerungseinrichtung 8 ausgegeben, damit der Benutzer nicht von Änderungen wie eine Federgabelabsenkung überrascht wird.

Bevorzugt ist es auch, dass insbesondere weitgehende Änderungen an den Dämpfungseigenschaften nur nach Bestätigung durch z. B. Drücken eines Knopfes oder nach akustischer Bestätigung durch den Fahrer vorgenommen werden. Zu weitgehenden Änderungen zählt insbesondere das Absenken einer Federgabel, da dies zu einer unterschiedlichen Fahrposition führt.

Auf dem ebenen Streckenabschnitt wird das Signal 64 ausgegebenen, welches hier eine nur geringe Dämpfung bewirkt. Möglich ist aber insbesondere auf ebenen Strecken ohne besondere Stoßbelastung auch weiterhin eine starke Dämpfung oder eine Blockierung der Dämpfereinrichtung 1.

Im folgenden Streckenabschnitt mit stärkeren Stößen wird ein Signal 65 ausgegeben, welches hier eine stärkere Dämpfung bewirkt. Im Anschluss daran wird Signal 66 mit einer geringen Dämpfung auf dem Streckenabschnitt mit kleineren Stößen ausgegeben. Auf dem Streckenabschnitt mit Gefälle wird hier vom Benutzer oder automatisch das Signal 67 für eine noch geringere Dämpfung ausgegeben.

In allen Fällen ist auch eine automatische Generierung von Signalen 63 bis 67 aufgrund der übrigen sensorisch gewonnenen Daten 6 bevorzugt. Die Stärke und Art der Dämpfung kann insbesondere auch von der gewählten Betriebsart bzw. dem gewählten Modus abhängen. Ein manueller Eingriff kann jederzeit möglich sein.

In allen Ausgestaltungen ist es bevorzugt, im Falle von Energiemangel rechtzeitig genug noch vordefinierte Eigenschaften einzustellen. Unterschreitet die noch zur Verfügung stehende Restenergie in der Speichereinrichtung ein vorbestimmtes Maß, wie z. B. 5% oder 10% kann ein Warnsignal ausgegeben und/oder automatisch auf vordefinierte oder einstellbare Notlaufeigenschaften oder Grundeigenschaften umgestellt werden. Dadurch kann sichergestellt werden, dass immer eine Rückfahrt oder Weiterfahrt mit vernünftigen Grundeinstellungen möglich ist. Bei einer anderen und insbesondere größeren Schwelle von z. B. 10%, 15%, 20% oder 25% kann auf einen Energiesparmodus umgeschaltet werden, in welchem weniger energieintensive Einstellungen vorgenommen werden. Bei Dämpfereinrichtungen mit Remanenzeigenschaften kann die Anzahl der Ummagnetisierungen pro Zeiteinheit reduziert werden. Möglich ist es auch, die Anzahl der Zwischenstufen zu begrenzen.

Der Energiespeicher 22 kann wiederaufladbar und insbesondere austauschbar vorgesehen sein. Die Größe, Kapazität und somit auch das Gewicht des Energiespeichers 22 können so an die gewünschten Bedingungen angepasst werden. Bei Renn- oder Wettkampfbedingungen wird ein genau angepasster Energiespeicher 22 verwendet. Bei Tagestouren kann er größer als bei kurzen Fahrten gewählt werden. Bei E-Bikes steht grundsätzlich schon Energie zur Verfügung, sodass auf einen separaten Energiespeicher 22 verzichtet werden kann.

Es ist möglich und bevorzugt, dass eine (Grund-)Kalibrierung durch den Hersteller erfolgt. Eine Feinkalibrierung kann durch das Team oder den Verein oder den örtlichen Fahrradhändler erfolgen. Im Rahmen einer Wartung können ein Reset und eine erneute Kalibrierung erfolgen.

In Fig. 10 ist eine Dämpfereinrichtung 1 dargestellt, bei der drei unterschiedliche Felderzeugungseinrichtungen 11, 11a und 11b vorgesehen sind. Die einzelnen Felderzeugungseinrichtungen 11, 11a und 11b können jeweils einen Dauermagneten und eine elektrische Spule umfassen. Der Aufbau der Dämpfereinrichtung 1 kann im Übrigen identisch zu dem Aufbau in Fig. 3 sein.

Durch die drei unterschiedlichen und gezielt veränderbaren Felderzeugungseinrichtungen 11, 11a und 11b können die Dämpfungseigenschaften noch variabler angepasst werden. Durch eine unterschiedliche Einstellung der jeweiligen Magnetisierung können unterschiedlichste Bedingungen für die Dämpfungskanäle 23 und 24 eingestellt werden.

Die Summe der einzelnen Felder der Felderzeugungseinrichtungen 11, 11a und 11b ergeben ein Gesamtfeld, das den Dämpfungskanal 23 bzw. 24 durchflutet. Die Form des Feldes beeinflusst dabei die Dämpferkennlinie 65. Die Felderzeugungseinrichtung 11 bestimmt hier die grundsätzliche Stärke des Feldes 51. Die Felderzeugungseinrichtungen 11a und 11b können das Feld im Dämpfungskanal 23 bzw. 24 beeinflussen.

Sind die Felderzeugungseinrichtung 11a und 11b gleich polarisiert wie die Felderzeugungseinrichtung 11, herrscht im Dämpfungskanal 23 ein homogenes Magnetfeld, dessen Stärke von der Magnetisierung aller Felderzeugungseinrichtung abhängt. Sind die Felderzeugungseinrichtung 11a und 11b umgekehrt gepolt wie die Felderzeugungseinrichtung 11, bildet sich im Dämpfungskanal 23 ein inhomogenes Magnetfeld aus.

Verschiedene Abschnitte wie ein Wirkabschnitt 87 mit maximaler Feldstärke, ein Übergangsabschnitt 88 mit stark abfallender Feldstärke und ein Bypass-Abschnitt 89 mit praktisch keiner oder nur sehr geringer Feldstärke werden ausgebildet. Die Form der Abschnitte hängt von der Magnetisierung der einzelnen Felderzeugungseinrichtungen ab und kann über einen weiten Bereich eingestellt werden. Möglich ist es auch, die beiden Felderzeugungseinrichtungen 11a und 11b gegensinnig zu polen, wobei dann einer wieder gleich gepolt ist wie die Felderzeugungseinrichtung 11. Der Einstellbereich der Dämpfereinrichtung 1 kann dadurch weiter vergrößert werden.

Die Spaltbreite des Dämpfungskanals 23 ist erheblich geringer als die Spaltlänge, wobei das Verhältnis von Spaltlänge zu Spaltbreite den Faktor 2 übersteigt und insbesondere größer 5 oder sogar größer als 10 ist.

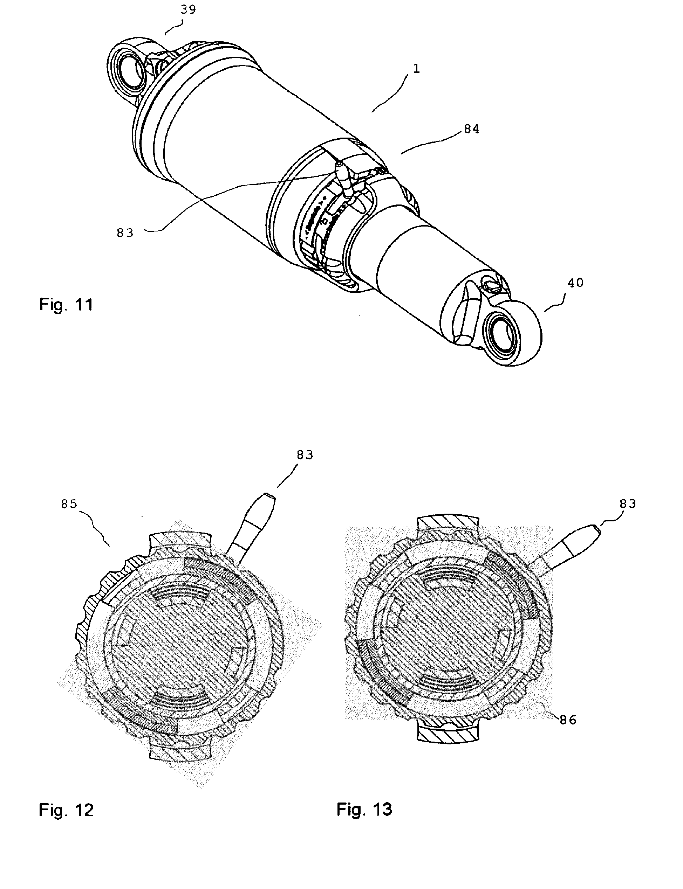

In Fig. 11 ist eine perspektivische Ansicht einer weiteren Dämpfereinrichtung 1 dargestellt, die grundsätzlich über die gleichen Funktionen wie die Dämpfereinrichtung aus Fig. 10 verfügt. Damit ist auch die Dämpfereinrichtung 1 durch eine Steuereinrichtung 8 in Abhängigkeit von Daten 6 von Sensoren 5 steuerbar. Zusätzlich ist hier ein mechanischer Bedienhebel 83 vorgesehen, der von der in Fig. 11 abgebildeten ersten Position 84 über die in Fig. 12 dargestellte Position 85 in die in Fig. 13 wiedergegebene dritte Position 86 verstellbar ist. Zwischenpositionen sind möglich.

Über die Verstellung des Bedienhebels 83 wird der Anteil der Dämpfungskanäle 23 und 24 eingestellt, die einem Magnetfeld einer bestimmten Stärke ausgesetzt sind. Der Querschnitt der Dämpfungskanäle 23 und 24 kann wieder in drei Abschnitte unterteilt werden, nämlich einen Wirkabschnitt 87, einen Übergangsabschnitt 88 und einen Bypass-Abschnitt 89. Durch die Wahl einer Position 84, 85 oder 86 kann das Verhältnis der Größe der Abschnitte 87 bis 89 zueinander gewählt werden. In der Position 86 ist der Bypass-Abschnitt am größten und in der Position 84 am kleinsten.

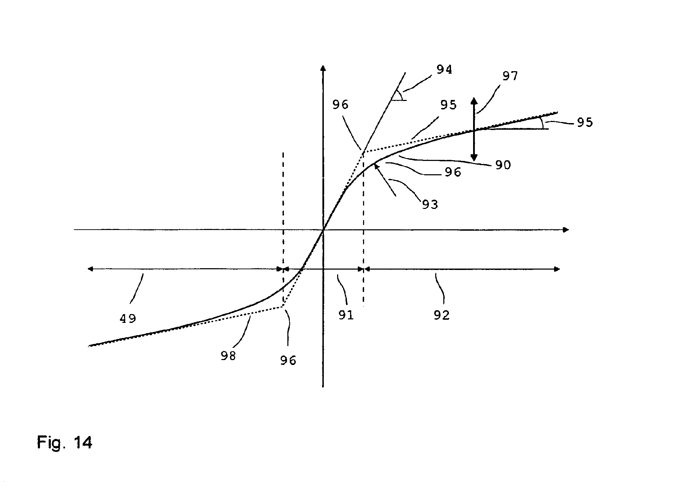

Fig. 14 zeigt eine Dämpferkennlinie 90 der Dämpfereinrichtung 1 nach Fig. 10 mit dem Dämpfungsventil 4 in einem Kraft-Geschwindigkeitsdiagramm des Dämpferkolbens. Der Low-Speed-Bereich 91 und der High-Speed-Bereich 92 sind über eine sanfte Abrundung mit einem Radius 93 verbunden. Die Kennlinie ist hier symmetrisch aufgebaut und zeigt den gleichen Verlauf für die Zug- und Druckstufe. Ein unterschiedlicher Verlauf der beiden Stufen ist aber grundsätzlich möglich und erwünscht.

Grundsätzlich entspricht auch die Kennlinie der Dämpfereinrichtung 1 nach den Figuren 11 bis 13 der Kennlinie 90. Die Variation wird dort über die Größe des Bypass-Abschnitts 89 und des Übergangsabschnitt 88 sowie des Sperrabschnitts oder Wirkabschnitts 87 erzielt.

Bei der Dämpfereinrichtung 1 nach Fig. 10 wird die Steigung 94 der Dämpferkennlinie im Low-Speed-Bereich 91 im Wesentlichen durch den Bypass-Abschnitt 89 bestimmt. Im High-Speed-Bereich 92 wird die Steigung 95 wesentlich durch den Querschnitt des gesamten Dämpfungskanals 23 bzw. 24 sowie die Stärke des Feldes im Wirkabschnitt 87 bestimmt.

Im Übergangsabschnitt 88, in welchem über seiner Ausdehnung ein schwächer werdendes Magnetfeld wirkt, führt die vorteilhafte nicht-lineare Ausprägung zu der Abrundung, die zu einer angenehmen und sicheren Betriebsweise führt.

Eingezeichnet ist weiterhin ein Pfeil 97, der die Auswirkung eines unterschiedlich starken Magnetfeldes anzeigt. Mit einem stärkeren Magnetfeld verschiebt sich die Kennlinie nach oben, während sie sich bei einem schwächeren Magnetfeld nach unten verschiebt.

Punktiert eingezeichnet ist eine Dämpferkennlinie 98, die ohne Übergangsabschnitt 88 vorliegen würde, wenn neben dem magnetorheologischen Dämpfungskanal 23 bzw. 24 noch ein zusätzlicher Dämpfungskanal 81 als Bypasskanal vorgesehen ist.

Die Steigung im Low-Speed-Bereich 94 ist durch den Anteil des Bypass-Abschnitts 89 einstellbar. Je größer der Bypass-Abschnitt 89, desto kleiner die Steigung. Auch der Nulldurchgang wird durch den Bypass-Abschnitt 89 erzeugt, da durch den Bypass-Abschnitt 89 jederzeit Dämpfungsfluid unbeeinflusst flie-βen kann, sodass schon bei kleinen Kräften eine entsprechende Dämpferkolbenbewegung ausgelöst wird.

Die Steigung im High-Speed-Bereich 95 wird durch die Form des gesamten Dämpfungskanals 23 und 24 und die eingestellte Stärke des magnetischen Feldes 52 im Wirkabschnitt 87 beeinflusst.

Der für den Komfort und die Sicherheit wichtige Bereich mit der Abrundung wird durch den Übergangsabschnitt 88 des Dämpfungskanals 23 bzw. 24 abgerundet, sodass eine ergonomische und sichere Betriebsweise ermöglicht wird. Die Größe des abgerundeten Bereichs ergibt sich aus der Größe und Gestalt des Übergangsabschnitts 88, der durch eine entsprechende Einstellung der Stärke der Magnetfelder der Felderzeugungseinrichtungen 11, 11a und 11b flexibel einstellbar ist. Die Stromversorgung durch einen Generator, Dynamo oder insbesondere auch einen Nabendynamo ist auch möglich.

Die Erfindung stellt eine vorteilhafte Fahrwerksteuerung zur Verfügung, die einen, zwei oder mehr Dämpfer umfassen kann. Durch die Speicherung der Daten und durch einen späteren Abruf können Daten auch ausgetauscht und Freunden, Vereinskameraden und ganz allgemein anderen Personen zur Verfügung gestellt werden. Dadurch kann jeder Benutzer seine eigene persönliche Fahrweise testen, vergleichen und überprüfen. Unerfahrene Benutzer können bei bekannten Strecken auf erprobte Werte zurückgreifen. Experten und Profis können auch experimentelle Einstellungen ausprobieren und sich an das Optimum herantasten. Die gewonnenen Erfahrungen können beispielsweise in Vereinen oder insbesondere auch in Internetforen ausgetauscht werden. Der Austausch über gewonnene Erfahrungen mit bestimmten Einstellungen bringt Erkenntnisse.

**Bezugszeichenliste:**

| | | | |
|---|---|---|---|
| 1 | Dämpfereinrichtung | 50 | Signal |
| 2-3 | Dämpferkammer | 51-53 | Feldstärke |
| 4 | Dämpfungsventil | 54 | Ausgleichsfeder |
| 5 | Sensor | 55 | Trennkolben |
| 6 | Daten | 56-58 | Signal |
| 7 | Zustand | 59 | Display |
| 8 | Steuereinrichtung | 60 | Bediendaten |
| 9 | Speichereinrichtung | 61 | Positionsdaten |
| 10 | Beeinflussungsmittel | 62 | Geländedaten |
| 11 | Felderzeugungseinrichtung | 63-67 | Signal |
| 12 | Feldstärke | 68 | Bedienknopf |
| 13 | Bedieneinrichtung | 69 | Gewählter Modus |
| 14 | rheologisches Medium | 70 | Zeitintervall |
| 15 | Spule | 71 | Steuereinheit |
| 16 | Dauermagnet | 72 | Zeitintervall |
| 17 | Magnetischer Impuls | 75 | Internet |
| 18 | GPS-Sensor | 81 | Strömungskanal |
| 19-20 | Feldstärke | 82 | Öffnung |
| 21 | Dämpfergehäuse | 83 | Einstelleinrichtung |
| 22 | Energiespeicher | 84-86 | Position |
| 23-24 | Dämpfungskanal | 87 | Wirkabschnitt |
| 25 | Zwischenwand | 88 | Übergangsabschnitt |
| 26-27 | Teilkanal | 89 | Bypass-Abschnitt |
| 28 | Magnetfeldlinie | 90 | Dämpferkennlinie |
| 29 | Dämpferkolben | 91 | Low-Speed-Bereich |
| 30 | Impulslänge | 92 | High-Speed-Bereich |
| 31 | Außenseite | 93 | Radius |
| 32 | Elektrische Leitungen | 94-95 | Steigung |
| 33 | Kern | 96 | Knickpunkt |
| 34 | Kolbenstange | 97 | Pfeil |
| 35 | Federeinrichtung | 98 | Dämpferkennlinie |
| 36 | Längsachse | 100 | Fahrwerksteuerung |
| 37 | Ringleiter | 110 | Fahrrad |
| 39-40 | Ende | 111 | Vorderrad |
| 41-42 | Federkammer | 112 | Hinterrad |
| 43 | Isolator | 113 | Rahmen |
| 44 | Schwingkreiseinrichtung | 114 | Federgabel |
| 47 | Kolben | 115 | Hinterraddämpfer |
| 48 | Sensor | 116 | Lenker |
| 49 | Verbindungsachse | 117 | Sattel |

## Patentansprüche

1. Fahrwerksteuerung (100) für ein wenigstens teilweise muskelbetriebenes Zweirad mit wenigstens einer Dämpfereinrichtung (1) mit einer ersten Dämpferkammer (2) und wenigstens einer zweiten Dämpferkammer (3), welche über wenigstens ein steuerbares Dämpfungsventil (4) miteinander gekoppelt sind, wobei wenigstens ein Sensor (5) vorgesehen ist, welcher Daten (6) über wenigstens einen aktuellen Zustand (7) detektiert, wobei dem wenigstens einen Dämpfungsventil (4) wenigstens eine Felderzeugungseinrichtung (11) zugeordnet ist, welche zur Erzeugung und Steuerung einer Feldstärke (12) in wenigstens einem Dämpfungskanal (23, 24) des Dämpfungsventils (4) dient, und wobei in dem Dämpfungskanal (23, 24) ein feldempfindliches rheologisches Medium (14) vorgesehen ist, um die Dämpfungseigenschaft der Dämpfereinrichtung (1) in Abhängigkeit von den Daten (6) des Sensors (5) zu steuern
**dadurch gekennzeichnet,**
**dass** eine elektrische Steuereinrichtung (8) und eine Speichereinrichtung (9) zur Steuerung der Dämpfereinrichtung (1) vorgesehen sind, sodass wenigstens eine Dämpfungseigenschaft der Dämpfereinrichtung (1) durch ein Signal (50) der Steuereinrichtung (8) beeinflussbar ist und dass der Dämpfungskanal (23, 24) durch wenigstens eine Zwischenwand (25) in wenigstens zwei Teilkanäle (26, 27) unterteilt ist, wobei sich die Teilkanäle (26, 27) quer zu den Magnetfeldlinien (28) erstrecken.

2. Fahrwerksteuerung (100) nach Anspruch 1, wobei die Felderzeugungseinrichtung (11) wenigstens eine elektrische Spule (15) zur Erzeugung eines Magnetfeldes umfasst.

3. Fahrwerksteuerung (100) nach Anspruch 1 oder 2, wobei wenigstens eine Felderzeugungseinrichtung (11) als Dauermagnet (16) ausgebildet ist, dessen Feldstärke durch mindestens einen magnetischen Impuls (17) auf einen beliebigen Wert zwischen Null und der Remanenz einstellbar ist, wobei vorzugsweise der magnetische Impuls (17) durch die elektrische Spule (15) erzeugbar ist.

4. Fahrwerksteuerung (100) nach mindestens einem der vorhergehenden Ansprüche, wobei der Dauermagnet (16) wenigstens teilweise aus einem Material besteht, welches einer Gruppe von Materialien entnommen ist, welche Alnico, CuNiFe, FeCrCo, FeCoVCr, SmCo, NdFeB, FeCr, FeCoVCr, Neodym und Materialien mit vergleichbaren magnetischen Eigenschaften enthält.

5. Fahrwerksteuerung (100) nach mindestens einem der vorhergehenden Ansprüche, wobei wenigstens eine elektrische Energiespeichereinrichtung (22) vorgesehen ist.

6. Fahrwerksteuerung (100) nach mindestens einem der vorhergehenden Ansprüche, wobei die Energiespeichereinrichtung (22) wenigstens die elektrische Energie zur Erzeugung wenigstens eines magnetischen Impulses (17) bereithält.

7. Fahrwerksteuerung (100) nach mindestens einem der vorhergehenden Ansprüche, wobei wenigstens ein GPS-Sensor (18) vorgesehen ist.

8. Fahrwerksteuerung (100) nach mindestens einem der vorhergehenden Ansprüche, wobei wenigstens ein Sensor (5) zur Erfassung der Stöße auf die Dämpfungseinrichtung (1) und/oder zur Erfassung der Eigenschaften der Fahrbahn und/oder zur Erfassung des Betriebszustands des Zweirades vorgesehen ist.

9. Fahrwerksteuerung (100) nach mindestens einem der vorhergehenden Ansprüche, wobei wenigstens eine Bedieneinrichtung (38) vorgesehen ist, mit welcher insbesondere verschiedene Modi anwählbar sind.

10. Fahrwerksteuerung (100) nach mindestens einem der vorhergehenden Ansprüche, wobei wenigstens ein Teil des Dauermagneten (16) benachbart zu der Spule (15) angeordnet oder von der Spule (15) umgeben ist.

11. Fahrwerksteuerung (100) nach mindestens einem der vorhergehenden Ansprüche, wobei die erste Dämpferkammer (2) und die zweite Dämpferkammer (3) wenigstens teilweise in einem gemeinsamen Dämpfergehäuse (21) angeordnet und durch wenigstens einen Dämpferkolben (29) voneinander getrennt sind.

12. Fahrwerksteuerung (100) nach mindestens einem der vorhergehenden Ansprüche, wobei der Dämpfungskanal (23, 24) und die Felderzeugungseinrichtung (11) derart strukturiert sind, dass der Dämpfungskanal (23, 24) über seinem Querschnitt einem inhomogenen Feld aussetzbar ist.

13. Fahrwerksteuerung (100) nach mindestens einem der vorhergehenden Ansprüche, wobei wenigstens eine Einstelleinrichtung (83) vorgesehen ist, mit welcher das in dem Dämpfungskanal (23, 24)) wirkende Feld (12) einstellbar ist.

14. Fahrwerksteuerung (100) nach dem vorhergehenden Anspruch, wobei mit der Einstelleinrichtung (83) wenigstens ein Anteil des Querschnittes des Dämpfungskanals (23, 24) einstellbar ist, der einem Feld (12) bestimmter Stärke ausgesetzt ist, sodass der Querschnitt des Dämpfungskanals (23, 24) auch nur teilweise einem Feld (12) bestimmter Stärke aussetzbar ist.

## Claims

1. Suspension system (100) for a two-wheeled vehicle muscle-powered at least in part having at least one damper device (1) with a first damper chamber (2) and at least one second damper chamber (3) coupled with one another via at least one controllable damping valve (4) wherein at least one sensor (5) is provided which detects data (6) about at least one current state (7) wherein the at least one damping valve (4) has at least one field generating device (11) assigned to it which serves to generate and control a field strength (12) in at least one damping channel (23, 24) of the damping valve (4), and wherein in the damping channel (23, 24) a field-sensitive rheological medium (14) is provided for controlling the damping characteristic of the damper device (1) in dependence on the data (6) of the sensor (5),
**characterized in**
**that** an electrical control device (8) and a storage device (9) are provided for controlling the damper device (1) such that at least one damping characteristic of the damper device (1) can be influenced by a signal (50) of the control device (8) and that the damping channel (23, 24) is subdivided into at least two sub-channels (26, 27) by means of at least one partition wall (25) wherein the sub-channels (26, 27) extend transverse to the magnetic field lines (28).

2. The suspension system (100) according to claim 1 wherein the field generating device (11) comprises at least one electric coil (15) for generating a magnetic field.

3. The suspension system (100) according to claim 1 or 2 wherein at least one field generating device (11) is configured as a permanent magnet (16) whose field strength can be set by way of at least one magnetic pulse (17) to a random value between zero and remanence wherein preferably the magnetic pulse (17) can be generated by the electric coil (15).

4. The suspension system (100) according to at least one of the preceding claims wherein the permanent magnet (16) consists at least in part of a material taken from a group of materials comprising, Alnico, CuNiFe, FeCrCo, FeCoVCr, SmCo, NdFeB, FeCr, FeCoVCr, neodymium, and materials having similar magnetic properties.

5. The suspension system (100) according to at least one of the preceding claims wherein at least one electric energy storage device (22) is provided.

6. The suspension system (100) according to at least one of the preceding claims wherein the energy storage device (22) provides at least the electric energy for generating at least one magnetic pulse (17).

7. The suspension system (100) according to at least one of the preceding claims wherein at least one GPS sensor (18) is provided.

8. The suspension system (100) according to at least one of the preceding claims wherein at least one sensor (5) is provided for capturing shocks on the damping device (1) and/or for capturing the road surface conditions and/or for capturing the operating state of the two-wheeled vehicle.

9. The suspension system (100) according to at least one of the preceding claims wherein at least one operating device (38) is provided with which in particular different modes can be selected.

10. The suspension system (100) according to at least one of the preceding claims wherein at least part of the permanent magnet (16) is disposed adjacent to the coil (15) or is surrounded by the coil (15).

11. The suspension system (100) according to at least one of the preceding claims wherein the first damper chamber (2) and the second damper chamber (3) are disposed in one shared damper housing (21) at least in part and separated from one another by means of at least one damper piston (29).

12. The suspension system (100) according to at least one of the preceding claims wherein the damping channel (23, 24) and the field generating device (11) are structured such that the damping channel (23, 24) can be exposed to an inhomogeneous field over its cross-section.

13. The suspension system (100) according to at least one of the preceding claims wherein at least one adjusting device (83) is provided with which to adjust the field (12) effective in the damping channel (23, 24).

14. The suspension system (100) according to the preceding claim wherein by means of the adjusting device (83) at least a portion of the cross-section of the damping channel (23, 24) is adjustable that is exposed to a field (12) of a specific strength such that the cross-section of the damping channel (23, 24) can be exposed to a field (12) of a specific strength in part only.

## Revendications

1. Commande de châssis (100) pour un deux roues entraîné au moins partiellement par force musculaire avec au moins un dispositif d'amortissement (1) pourvu d'une première chambre d'amortisseur (2) et d'au moins une deuxième chambre d'amortisseur (3), lesquelles sont accouplées l'une à l'autre par le biais d'au moins une soupape d'amortissement (4) contrôlable, au moins une sonde (5) étant prévue pour détecter des données (6) sur au moins un état (7) actuel, au moins un moyen de génération de champ (11) étant attribué à l'au moins une soupape d'amortissement (4), ledit moyen de génération de champ servant à générer et à contrôler une intensité de champ (12) dans au moins un canal d'amortissement (23, 24) de la soupape d'amortissement (4) et un milieu (14) rhéologique réactif au champ étant prévu dans le canal d'amortissement (23, 24) pour contrôler la capacité d'amortissement du dispositif d'amortissement en fonction des données (6) de la sonde (5),
**caractérisée en ce**
**qu'**un dispositif de commande électrique (8) et un dispositif d'enregistrement (9) sont prévus pour commander le dispositif d'amortissement (1), de telle sorte qu'un signal (50) émis par le dispositif de commande (8) peut influencer au moins une caractéristique d'amortissement du dispositif d'amortissement (1), et que le canal d'amortissement (23, 24) est divisé en au moins deux canaux partiels (26, 27) par au moins une cloison (25), lesdits canaux partiels (26, 27) étant perpendiculaires aux lignes de champ magnétique (28).

2. Commande de châssis (100) selon la revendication 1, le moyen de génération de champ (11) comprenant au moins une bobine électrique (15) pour générer un champ magnétique.

3. Commande de châssis (100) selon la revendication 1 ou 2, au moins un moyen de génération de champ (11) étant conçu en tant qu'aimant permanent (16) dont l'intensité de champ peut être réglée par au moins une impulsion magnétique (17) à une valeur quelconque entre zéro et la rémanence, ladite impulsion magnétique (17) pouvant être générée de préférence par la bobine électrique (15).

4. Commande de châssis (100) selon au moins l'une quelconque des revendications précédentes, l'aimant permanent (16) se composant au moins partiellement d'un matériau provenant d'un groupe de matériaux comprenant l'alnico, le CuNiFe, FeCrCo, FeCoVCr, SmCo, NdFeB, FeCr, FeCoVCr, néodyme et des matériaux aux caractéristiques magnétiques semblables.

5. Commande de châssis (100) selon au moins l'une quelconque des revendications précédentes, au moins un dispositif d'accumulation d'énergie (22) étant prévu.

6. Commande de châssis (100) selon au moins l'une quelconque des revendications précédentes, le dispositif d'accumulation d'énergie (22) mettant à disposition au moins l'énergie électrique nécessaire pour générer au moins une impulsion magnétique (17).

7. Commande de châssis (100) selon au moins l'une quelconque des revendications précédentes, au moins une sonde GPS (18) étant prévue.

8. Commande de châssis (100) selon au moins l'une quelconque des revendications précédentes, étant prévue au moins une sonde (5) pour détecter les chocs sur le dispositif d'amortissement (1) et/ou pour déterminer les caractéristiques de la piste et/ou pour déterminer l'état de fonctionnement du deux roues.

9. Commande de châssis (100) selon au moins l'une quelconque des revendications précédentes, au moins un dispositif de commande (38) étant prévu au moyen duquel il est possible de sélectionner notamment différents modes.

10. Commande de châssis (100) selon au moins l'une quelconque des revendications précédentes, au moins une partie de l'aimant permanent (16) étant agencée au voisinage de la bobine (15) ou entouré de ladite bobine (15).

11. Commande de châssis (100) selon au moins l'une quelconque des revendications précédentes, la première chambre d'amortisseur (2) et la deuxième chambre d'amortisseur (3) étant au moins partiellement agencées dans un boîtier d'amortissement (21) commun et séparées l'une de l'autre par au moins un piston d'amortissement (29).

12. Commande de châssis (100) selon au moins l'une quelconque des revendications précédentes, le canal d'amortissement (23, 24) et le moyen de génération de champ (11) étant structurés de telle sorte que le canal d'amortissement (23, 24) peut être exposé, en sa section, à un champ inhomogène.

13. Commande de châssis (100) selon au moins l'une quelconque des revendications précédentes, au moins un dispositif de réglage (83) étant prévu, au moyen duquel le champ (12) actif dans le canal d'amortissement (23, 24) est ajustable.

14. Commande de châssis (100) selon la revendication précédente, au moins une portion de la section du canal d'amortissement (23, 24) étant ajustable au moyen du dispositif de réglage (83), ladite portion étant soumise à un champ (12) d'une certaine intensité, de telle sorte que la section du canal d'amortissement (23, 24) peut aussi n'être soumise que partiellement à un champ (12) d'une certaine intensité.
